# EUROPEAN PATENT SPECIFICATION

(11) **EP 4 257 528 B1**
(45) Date of publication and mention of the grant of the patent: **03.06.2026**
(21) Application number: 23166282.6
(22) Date of filing: 03.04.2023
(51) Int. Cl.: B65H 63/00, B65H 67/06, B65H 67/08, G05B 19/408, G05B 19/418

(54) **YARN WINDING SYSTEM**
GARNWICKELSYSTEM
SYSTÈME DE BOBINAGE DE FIL

(30) Priority: 08.04.2022 JP 2022064570
(43) Date of publication of application: 11.10.2023
(73) Proprietor: Murata Machinery, Ltd., Kyoto-shi, Kyoto 601-8326 (JP)
(72) Inventor: KASUGA, Teruyuki, Kyoto, 612-8686 (JP)
(74) Representative: Weickmann & Weickmann PartmbB

(56) References cited:
- EP-A2- 2 960 195

## Description

### TECHNICAL FIELD

The present invention relates to a yarn winding system.

### BACKGROUND

As a conventional yarn winding system, the one described in Patent Literature 1 (Japanese Unexamined Patent Publication No. 2008-74524), for example, is known. The yarn winding system described in Japanese Unexamined Patent Publication No. 2008-74524 includes an automatic winder and a transportation apparatus (feeding apparatus). The automatic winder includes a plurality of winding units each being configured to wind yarn to form a package. The transportation apparatus feeds yarn feeding bobbins to the winding units. If the setting of the winding units is changed in the yarn winding system described in Japanese Unexamined Patent Publication No. 2008-74524, the setting of yarn type in the transportation apparatus is changed.

A yarn winding system according to the preamble part of claim 1 is known from EP 2 960 195 A2. The winding units of the textile machine are configured to operate based on pre-set setting contents of a plurality of pre-defined different setting items. A control device stores a plurality of setting lots each including setting contents for the plurality of setting items relating to operation of the winding units. These setting lots have different setting contents for at least one of the setting items. One selected of these setting lots may be set for one or more of the winding units, by setting the setting contents included in the selected setting lot for the plurality of setting items.

### SUMMARY

If the setting of the winding units is changed in the yarn winding system, it is necessary to also change the setting of the transportation apparatus. The setting of the transportation apparatus includes not only the yarn type but also various other setting items. Consequently, if the setting of the winding units is changed, it is necessary to change a plurality of setting items set for the transportation apparatus. Therefore, the setting work for the transportation apparatus takes time and effort.

An aspect of the present invention is to provide a yarn winding system that can change the setting of the transportation apparatus in a simpler manner. A further aspect of the present invention is to provide a method for configuring and operating a yarn winding system that simplifies a change of the setting of the yarn winding system. For achieving these objects, the invention provides the yarn winding system of claim 1 and the method of claim 14. Preferred embodiments are defined in dependent claims 2 to 13 and 15.

A yarn winding system according to an aspect of the present invention includes a transportation apparatus configured to transport a yarn feeding bobbin to a textile machine including a plurality of winding units each being configured to wind yarn to form a package, and a control device configured to control the transportation apparatus. The transportation apparatus includes a processing unit configured to perform processing relating to the yarn feeding bobbin based on pre-set setting contents of a plurality of pre-defined different setting items that related to the operation of the processing unit. The control device stores therein a plurality of first setting lots each including setting contents for the plurality of first setting items relating to operation of the processing unit of the transportation apparatus, the first setting lots having different setting contents for at least of the first setting items, and sets one of the first setting lots for the transportation apparatus, by setting the setting contents included in the selected first setting lots for the plurality of first setting items. Therewith the transportation apparatus is configured to perform the processing relating to the yarn feeding bobbin based on the set setting contents of the selected first setting lot.

In the yarn winding system according to an aspect of the present invention, the control device stores therein the plurality of first setting lots each including the plurality of first setting items with their setting contents relating to operation of the processing unit of the transportation apparatus, the first setting lots having at least one different setting content in at least one of first setting items. Thus, the yarn winding system stores therein the plurality of first setting items of the transportation apparatus as the first setting lots. By setting the first setting lot for the transportation apparatus, the yarn winding system can collectively set the plurality of first setting items for the transportation apparatus. Therefore, the yarn winding system can save time and effort for setting the plurality of first setting items one by one for the transportation apparatus. As a result, the yarn winding system can change the setting of the transportation apparatus in a simpler manner.

In one embodiment, the yarn winding system may include a display device the display of which is controlled by the control device. The control device may cause the display device to display the first setting lots and display the first setting lot set for the transportation apparatus and the first setting lot or first setting lots not set for the transportation apparatus in different presentation modes. With this configuration the first setting lot set for the transportation apparatus and the first setting lot(s) not set for the transportation apparatus can be readily recognized on the display device.

The winding units are typically configured to operate based on pre-set setting contents of a plurality of pre-defined different second setting items. In one embodiment, the control device may store therein a plurality of second setting lots each including setting contents for the plurality of second setting items relating to operation of the winding units, the second setting lots having different setting contents for at least one of the second setting items, and may set one of the second setting lots for one or more of the winding units by setting the setting contents included in the selected second setting lot for the plurality of second setting items. Therewith the respective winding unit is configured to operate based on the set setting contents of the selected second setting lot. Thus, the control device stores therein the second setting lots set for the winding unit separately from the first setting lots set for the transportation apparatus. By setting the second setting lot for one or more of the winding units, this configuration can collectively set the plurality of second setting items for the winding unit. Therefore, the yarn winding system can change the setting of the winding units in a simpler manner.

In one embodiment, the control device may store therein association information in which the first setting lot and the second setting lot are associated with each other. In this configuration, the first setting lot and the second setting lot can be appropriately set for the transportation apparatus and the winding unit, respectively, by using the association information.

In one embodiment, the yarn winding system may include a/the display device the display of which is controlled by the control device. The control device may display the first setting lot set for the transportation apparatus, the second setting lot set for one or more of the winding units, and the association information together on one screen of the display device. With this configuration, the first setting lot set for the transportation apparatus, the second setting lot set for one or more of the winding units, and the association information can be confirmed at a glance on the screen of the display device. In addition, the yarn winding system enables setting the first setting lot and the second setting lot while causing the association information to be confirmed.

In one embodiment, the control device may cause the display device to display the second setting lots and display the second setting lot set for the winding unit and the second setting lot or the second setting lots not set for the winding unit in different presentation modes. With this configuration, the second lot set for the winding unit and the second lot(s) not set for the winding unit can be readily recognized on the display device.

In one embodiment, the control device may store therein a combination of the first setting lot set for the transportation apparatus and the second setting lot set for the winding unit. The control device may output mismatch information when the combination of the first setting lot set for the transportation apparatus and the second setting lot set for the winding unit is different from the association information. With this configuration, the mismatch information allows the user to recognize that setting different from the setting associated in the association information has been made.

In one embodiment, when the control device performs a save process to save the first setting lot and the second setting lot after outputting the mismatch information, the control device may update the combination of the first setting lot and the second setting lot subjected to the save process as the association information. In this configuration, the combination of the first setting lot and the second setting lot saved by the user is updated as the association information.

In one embodiment, the control device may acquire a feed amount of the yarn feeding bobbins per unit time in the transportation apparatus for each of the first setting lots and a discharge amount of used bobbins per unit time in the winding unit for each of the second setting lots, and allow only the first setting lot and the second setting lot that make the feed amount equal to or larger than the discharge amount to be combined by setting this first setting lot for the transportation apparatus and setting this second setting lot for the winding unit. In this configuration, only the first setting lot and the second setting lot that make the feed amount equal to or larger than the discharge amount can be combined. As a result, the yarn feeding bobbin can be transported from the transportation apparatus to the winding unit without generating a standby state in the winding unit. Therefore, the embodiment can prevent reduction in production efficiency of the package in the winding unit.

In one embodiment, the transportation apparatus may include a first transportation route configured to transport the yarn feeding bobbin and a second transportation route configured to transport the yarn feeding bobbin. The first transportation route and the second transportation route may be each provided with a respective processing unit as already mentioned. The control device may set one respective of the first setting lots for each of the first transportation route and the second transportation route. In this configuration, the first setting lot can be set for each of the two transportation routes. Thus, if the transportation apparatus includes a plurality of transportation routes for which the first setting lots need to be set, the setting of the transportation apparatus can be changed in a simpler manner.

In one embodiment, when the control device receives input to transfer the first setting lot set for one of the first transportation route and the second transportation route to the other of the first transportation route and the second transportation route, the control device may apply the first setting lot set for one of the first transportation route and the second transportation route to the other of the first transportation route and the second transportation route. In this configuration, when the user inputs a command to transfer the first setting lot set for one of the transportation routes, the first setting lot is also set for the other of the transportation routes. Therefore, the yarn winding system can simplify the setting.

In one embodiment, the transportation apparatus may include an acquisition unit provided upstream the processing unit on a transportation route of the yarn feeding bobbin and configured to acquire identification information for identifying the yarn feeding bobbin. The control device may set the first setting lot based on the identification information acquired by the acquisition unit. In this configuration, for example, the first setting lot can be set based on the yarn type acquired from the identification information.

In one embodiment, the processing unit may be at least one of a bobbin drawer, a bobbin dropper, a bunch winding releaser, a yarn end processor, and a yarn end finder.

An aspect of the present invention can change the setting of the transportation apparatus in a simpler manner. To this end, (first) setting lots are introduced that include setting contents for a plurality of (first) setting items, wherein the (first) setting lots that are selectable for the transportation apparatus include different setting contents for one or plural of the underlying (first) setting items. A further aspect of the present invention can change the setting of one or plural or all of the winding units in a simpler manner. To this end, (second) setting lots are introduced that include setting contents for a plurality of (second) setting items, wherein the (second) setting lots that are selectable for that one or plural winding units include different setting contents for one or plural of the underlying (second) setting items. These setting lots essentially are pre-defined or pre-definable data sets that include operation parameter, yarn parameter and so forth that enable an appropriate operation of the transportation apparatus and the winder units, respectively. These "setting lots" may relate to production lots of yarn packages to be produced, e.g. for servicing a corresponding order of a customer. These "setting lots" could alternatively be denoted as "lot conditions" or "lot parameter" or "setting conditions" or "setting parameter".

### BRIEF DESCRIPTION OF THE DRAWINGS

FIG. 1 is a schematic of the configuration of a yarn winding system;
FIG. 2 is a front view of an automatic winder;
FIG. 3 is a diagram of a transportation line of a transportation apparatus;
FIG. 4A is a perspective view of a transportation tray transported in the yarn winding system;
FIG. 4B is a perspective view of a winding tube attached to the transportation tray;
FIG. 4C is a perspective view of a yarn feeding bobbin attached to the transportation tray;
FIG. 4D is a perspective view of a prepared yarn feeding bobbin attached to the transportation tray;
FIG. 5 is a diagram of the configuration of a machine control device;
FIG. 6 is a view of an example of a screen displayed on a touch panel of the machine control device;
FIG. 7 is a view of an example of the screen displayed on the touch panel of the machine control device;
FIG. 8 is a view of an example of the screen displayed on the touch panel of the machine control device;
FIG. 9 is a view of an example of the screen displayed on the touch panel of the machine control device;
FIG. 10 is a view of an example of the screen displayed on the touch panel of the machine control device;
FIG. 11 is a view of an example of the screen displayed on the touch panel of the machine control device;
FIG. 12 is a view of an example of the screen displayed on the touch panel of the machine control device; and
FIG. 13 is a schematic of the configuration of the yarn winding system according to another embodiment.

### DETAILED DESCRIPTION

Exemplary embodiments according to the present invention are described below in greater detail with reference to the accompanying drawings. In the explanation of the drawings, identical or equivalent components are denoted by like reference numerals, and redundant explanation thereof is omitted.

### Configuration of the Yarn Winding System 1

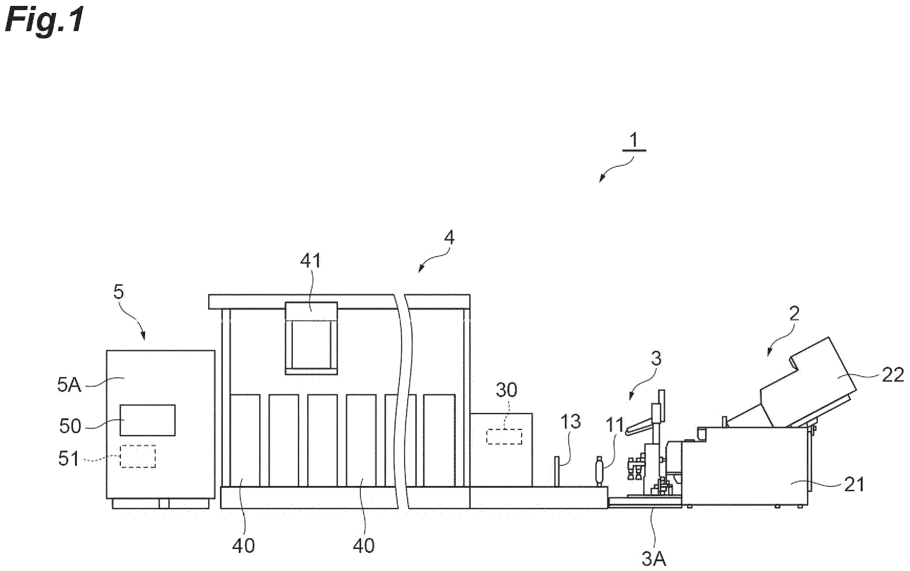

A yarn winding system 1 illustrated in FIG. 1 winds yarn Y to form a package P. The yarn winding system 1 includes a bobbin feeding apparatus 2, a transportation apparatus 3, an automatic winder (textile machine) 4, and a machine control device (control device) 5. As an example, the bobbin feeding apparatus 2, the transportation apparatus 3, the automatic winder 4, and the machine control device 5 are arranged in this order in a first direction (horizontal direction in FIG. 1). In the following description, the direction in which the bobbin feeding apparatus 2, the transportation apparatus 3, the automatic winder 4, and the machine control device 5 are arranged may be referred to simply as a "first direction". The bobbin feeding apparatus 2 is provided at a first end (on the right side in FIG. 1) of the transportation apparatus 3 in the first direction. The transportation apparatus 3 is provided at the first end (on the right side in FIG. 1) of the automatic winder 4 in the first direction. The machine control device 5 is provided at a second end (on the left side in FIG. 1) of the automatic winder 4 in the first direction.

The bobbin feeding apparatus 2 feeds a yarn feeding bobbin 11 supplied from a spinning frame (not illustrated) or the like to the transportation apparatus 3. The transportation apparatus 3 transports the yarn feeding bobbin 11 from the bobbin feeding apparatus 2 to the automatic winder 4 and transports an used bobbin 13 from the automatic winder 4 to the bobbin feeding apparatus 2. The automatic winder 4 winds the yarn Y on the yarn feeding bobbin 11 transported from the bobbin feeding apparatus 2 via the transportation apparatus 3 to form the package P.

### Configuration of the Bobbin Feeding Apparatus 2

The bobbin feeding apparatus 2 feeds the yarn feeding bobbin 11 formed in the previous process, such as a spinning frame (not illustrated), to the transportation apparatus 3. The bobbin feeding apparatus 2 includes a feeding device 21 and a charging device 22.

The feeding device 21 feeds the yarn feeding bobbin 11 to the transportation apparatus 3. The feeding device 21 includes a yarn feeding bobbin arrangement device (not illustrated) that aligns the direction of the yarn feeding bobbin 11 supplied from the charging device 22 in a predetermined direction. The feeding device 21 feeds the supplied yarn feeding bobbin 11 onto a transportation route of the transportation apparatus 3. The charging device 22 receives the yarn feeding bobbin 11 formed in a spinning frame or the like. The charging device 22 can temporarily accumulate the yarn feeding bobbin 11. The charging device 22 transfers the yarn feeding bobbin 11 to the feeding device 21.

### Configuration of the Transportation Apparatus 3

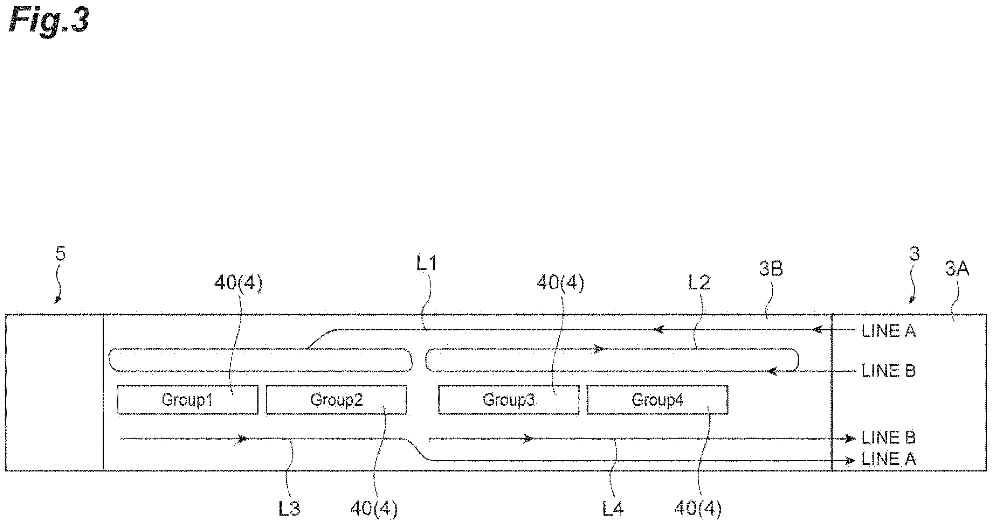

The transportation apparatus 3 transports the yarn feeding bobbin 11 from the bobbin feeding apparatus 2 to the automatic winder 4 and transports the used bobbin 13 from the automatic winder 4 to the bobbin feeding apparatus 2. As illustrated in FIGS. 1 and 3, the transportation apparatus 3 includes a bobbin processing unit (processing unit) 3A and a bobbin transfer unit (transfer unit) 3B.

The bobbin processing unit 3A performs predetermined processing on the yarn feeding bobbin 11 to be fed to the automatic winder 4. The bobbin processing unit 3A can include a bobbin drawer, a bobbin dropper, a bunch winding releaser, a yarn end processor, and a yarn end finder, none of which are illustrated.

As illustrated in FIG. 3, the bobbin transfer unit 3B includes a first transportation unit L1 and a second transportation unit L2 configured to transport the yarn feeding bobbin 11 from the bobbin processing unit 3A to the automatic winder 4, and a third transportation unit L3 and a fourth transportation unit L4 configured to transport the used bobbin 13 from which the yarn Y is taken off in the automatic winder 4 to the bobbin processing unit 3A. The bobbin transfer unit 3B further includes a plurality of fifth transportation units (not illustrated) connecting the first transportation unit L1 and the third transportation unit L3, and a plurality of sixth transportation units (not illustrated) connecting the second transportation unit L2 and the fourth transportation unit L4.

The first transportation unit L1, the third transportation unit L3, and the fifth transportation units constitute a line A (first transportation route). The second transportation unit L2, the fourth transportation unit L4, and the sixth transportation units constitute a line B (second transportation route). The first transportation unit L1, the second transportation unit L2, the third transportation unit L3, the fourth transportation unit L4, the fifth transportation units, and the sixth transportation units each include a conveyor, a conveyor drive unit, a route defining plate, and other components that are configured to transfer the yarn feeding bobbin 11 or the used bobbin 13 along the transportation route. The processing units of the bobbin processing unit 3A are provided for the respective lines A and B.

The first transportation unit L1 and the second transportation unit L2 transport the yarn feeding bobbin 11 to a predetermined winding unit 40 of the automatic winder 4. As illustrated in FIG. 3, the winding units 40 can be divided into a plurality of groups. The winding units 40 according to the present embodiment are divided into four groups: "Group 1", "Group 2", "Group 3", and "Group 4". "Group 1", "Group 2", "Group 3" and "Group 4" are set in this order from the second end in the first direction in the automatic winder 4.

Each group includes one or more of the winding units 40. The automatic winder 4 according to the present embodiment includes sixty winding units 40 as described later. In this case, "Group 1" and "Group 2" can include a total of thirty winding units 40. "Group 3" and "Group 4" can include a total of thirty winding units 40. Specifically, for example, "Group 1" can include ten winding units 40, and "Group 2" can include twenty winding units 40. Similarly, for example, "Group 3" can include ten winding units 40, and "Group 4" can include twenty winding units 40. Note that the total number of the winding units 40 of "Group 1" and "Group 2" may be different from that of the winding units 40 of "Group 3" and "Group 4".

The first transportation unit L1 transports the yarn feeding bobbins 11 to the winding units 40 included in "Group 1" and "Group 2". The fifth transportation units branch off from the first transportation unit L1 and are provided for the respective winding units 40. The first transportation unit L1 transports the yarn feeding bobbins 11 to the winding units 40 included in "Group 1" and "Group 2" via the fifth transportation units. The second transportation unit L2 transports the yarn feeding bobbins 11 to the winding units 40 included in "Group 3" and "Group 4". The sixth transportation units branch off from the second transportation unit L2 and are provided for the respective winding units 40. The second transportation unit L2 transports the yarn feeding bobbins 11 to the winding units 40 included in "Group 3" and "Group 4" via the sixth transportation units.

The third transportation unit L3 transports the used bobbins 13 discharged from the winding units 40 included in "Group 1" and "Group 2". The third transportation unit L3 transports the used bobbins 13 discharged from the winding units 40 included in "Group 1" and "Group 2" via the fifth transportation units. The fourth transportation unit L4 transports the used bobbins 13 discharged from the winding units 40 included in "Group 3" and "Group 4". The fourth transportation unit L4 transports the used bobbins 13 discharged from the winding units 40 included in "Group 3" and "Group 4" via the sixth transportation units.

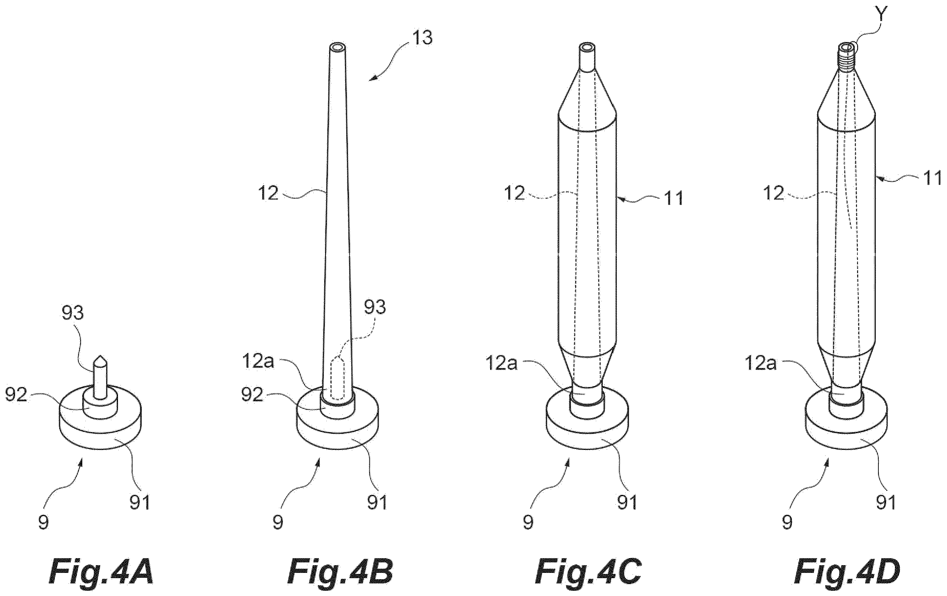

The transportation apparatus 3 transports each of the yarn feeding bobbins 11 and the used bobbins 13 in a manner mounted on a tray 9 as illustrated in FIG. 4A. The tray 9 includes a disc-shaped base 91, a protrusion 92 protruding upward from the base 91, and a pin 93 protruding further upward from the protrusion 92. The yarn feeding bobbin 11 illustrated in FIG. 4C (including the prepared yarn feeding bobbin 11 illustrated in FIG. 4D) and the used bobbin 13 illustrated in FIG. 4B are each mounted on the tray 9 with one end of a winding tube 12 facing upward by inserting the pin 93 into a lower part 12a of the winding tube 12. In other words, the tray 9 enables the yarn feeding bobbin 11 and the used bobbin 13 to be placed upright thereon with their axial directions extending along the vertical direction.

As illustrated in FIG. 1, the transportation apparatus 3 includes a transportation control unit 30. The transportation control unit 30 is communicably connected to the machine control device 5. The transportation control unit 30 controls the operations of each unit of the bobbin processing unit 3A and the bobbin transfer unit 3B of the transportation apparatus 3 based on the instructions (setting information) from the machine control device 5.

### Configuration of the Automatic Winder 4

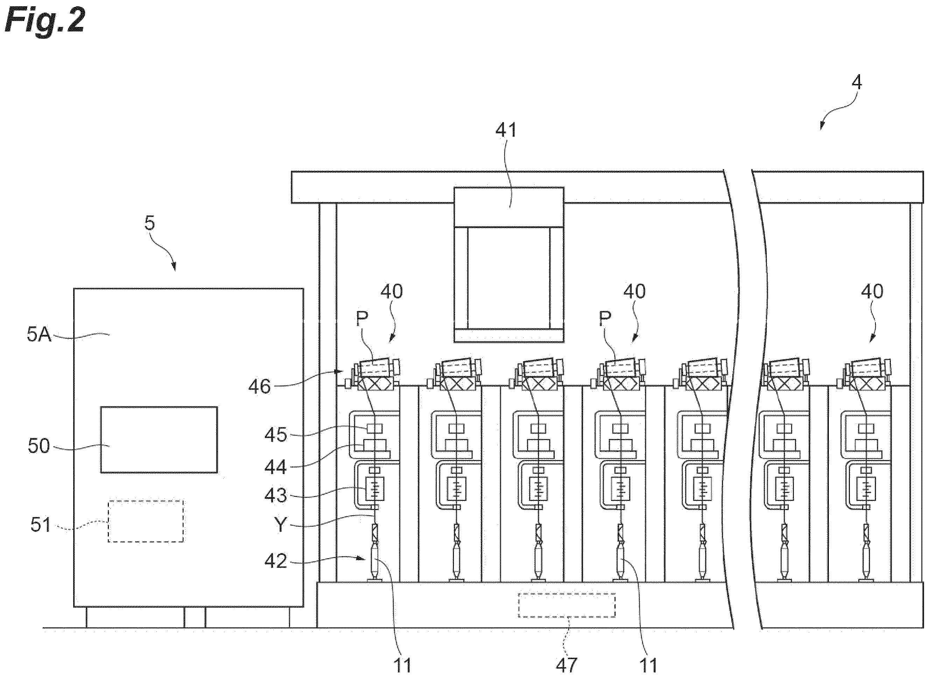

As illustrated in FIG. 2, the automatic winder 4 includes the plurality of winding units 40 and a doffing device 41. Each winding unit 40 winds the yarn Y from the yarn feeding bobbin 11, thereby forming the package P. The doffing device 41 doffs the package P from the winding unit 40.

The winding units 40 are arranged along the arrangement direction to constitute the automatic winder 4. The arrangement direction is identical with the first direction. The winding unit 40 winds the yarn Y from the yarn feeding bobbin 11 fed from the bobbin feeding apparatus 2 via the transportation apparatus 3 to form the package P. The winding unit 40 includes a yarn feeder 42, a tension applier 43, a yarn splicer 44, a yarn clearer 45, and a winder 46 arranged in order from the upstream (bottom side in FIG. 2) to the downstream (top side in FIG. 2) of the yarn path. In addition, the winding unit 40 includes a unit controller 47.

The yarn feeder 42 supports the yarn feeding bobbin 11 transported from the transportation apparatus 3 and assists in unwinding the yarn Y on the yarn feeding bobbin 11. The yarn feeder 42 feeds the used bobbin 13 from which all the yarn Y is unwound to the transportation apparatus 3. The tension applier 43 applies predetermined tension to the yarn Y running from the yarn feeder 42 to the winder 46. The yarn splicer 44 is a device that connects the ends of the yarn Y broken off for some reason, such as when the yarn Y is cut because a yarn defect is detected.

The yarn clearer 45 monitors the state of the yarn Y running from the yarn feeder 42 to the winder 46 between the yarn feeder 42 and the winder 46 to detect a yarn defect. The yarn clearer 45 determines whether to remove the detected yarn defect based on the set clearing conditions. If it is determined that the yarn defect should be removed, the yarn Y is cut by a cutter to remove the yarn defect. The cutter is attached to the yarn clearer 45. The cutter, however, may be provided separately from the yarn clearer 45. The winder 46 unwinds the yarn Y from the yarn feeding bobbin 11 supported by the yarn feeder 42 and winds the unwound yarn Y to form the package P.

The unit controller 47 is provided for the plurality of winding units 40. The unit controller 47 controls the operations of each unit of the winding unit 40 based on the instructions (setting information) from the machine control device 5. The unit controller 47 recognizes information on the yarn Y being wound from the yarn feeding bobbin 11 based on the results of detection performed by the yarn clearer 45. Information on the length of the wound yarn Y is measured by the winder 46 or a dedicated yarn length sensor (not illustrated) provided separately and is transmitted to the unit controller 47. The information on the length of the yarn Y transmitted to the unit controller 47 is transferred to the yarn clearer 45 by the unit controller 47.

The doffing device 41 doffs the package P formed by each of the winding units 40. In the present embodiment, one doffing device 41 is provided for the plurality of winding units 40. The doffing device 41 supplies the doffed package P to a package conveyor (not illustrated) provided at the rear of the machine.

### Configuration of the Machine Control Device 5

The machine control device 5 is a device that performs operations of setting and inputting the operating conditions of the yarn winding system 1 and monitors the operating state for efficiency and quality control, for example. Specifically, the machine control device 5 can perform the following operations: setting and inputting various operating conditions of the bobbin feeding apparatus 2, the transportation apparatus 3, and the automatic winder 4, saving, assigning, and deleting lot settings, and setting various maintenance modes. The machine control device 5 can also display data on the operating state of the yarn winding system 1 and the results of analysis and display the alarm generation state of the yarn winding system 1.

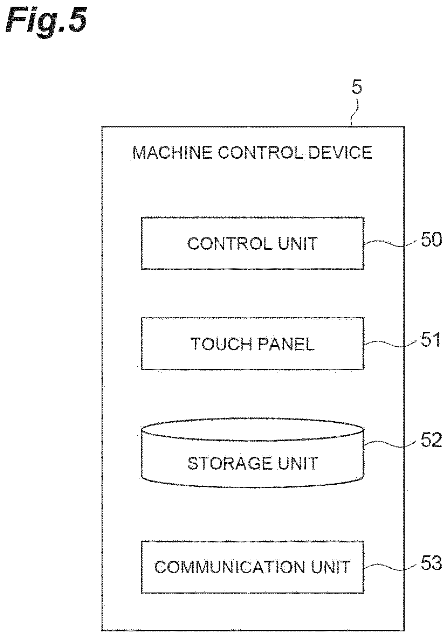

As illustrated in FIG. 5, the machine control device 5 includes a control unit 50, a touch panel (display device) 51, a storage unit 52, and a communication unit 53. The control unit 50 controls the bobbin feeding apparatus 2, the transportation apparatus 3, and the automatic winder 4. Specifically, the control unit 50 causes the setting information stored in the storage unit 52 to be output to the bobbin feeding apparatus 2, the transportation apparatus 3, and the automatic winder 4. The control unit 50 includes an electronic control unit including a central processing unit (CPU), a read only memory (ROM), a random access memory (RAM), an electrically erasable programmable read only memory (EEPROM), a communication device, a storage device, and other components.

The control unit 50 controls a display screen to be displayed on the touch panel 51. The control unit 50 generates display information based on the setting information stored in the storage unit 52 and outputs the display information to the touch panel 51 to display the display screen on the touch panel 51.

The touch panel 51 displays information on various settings of the yarn winding system 1 and information on the operating state of the yarn winding system 1 and receives operations from a user. The touch panel 51 functions as a display unit and an input unit. The touch panel 51 is disposed on a machine frame 5A, for example, as illustrated in FIG. 2. The touch panel 51 displays the display screen based on the display information output from the control unit 50. When the display screen is touched by the user, the touch panel 51 outputs the operation information to the control unit 50 or the storage unit 52. Note that the display device may include the display unit and the input unit separately.

The machine control device 5 sets a CBF lot (first lot or first setting lot) of the transportation apparatus 3 and a unit lot (second lot or second setting lot) of the winding unit 40. The transportation apparatus 3 is controlled based on the setting of the CBF lot. The winding unit 40 is controlled based on the setting of the unit lot. By performing a predetermined operation on the touch panel 51, the machine control device 5 displays a setting management screen for the CBF lot and the unit lot (hereinafter, also referred to simply as "lot") on the touch panel 51.

The machine control device 5 stores therein a plurality of lots for each of the transportation apparatus 3 and the winding units 40. Each lot is composed of a combination (bundle) of a plurality of setting items. The plurality of lots each have different contents of the setting items.

The setting items (first setting items) of the CBF lot set for the bobbin processing unit 3A of the transportation apparatus 3 can include at least one of the following items: yarn type, bunch unwinding amount, searcher operation time, searcher descent speed, searcher descent length, cutter (yarn end processing device) operation start timing, the number of trials of yarn end finding, cutter (top hole) operation start timing, and yarn suction tube descent time. The machine control device 5 stores therein a plurality of CBF lots. The setting contents **(e.g.,** set value) for each setting item are set in advance for each of the CBF lots. The CBF lots include at least one different setting content for one or plural of the same setting items.

The setting items (second setting items) of the unit lot set for the winding unit 40 can include at least one of the following items: yarn type, yarn count number, weight of yarn on the yarn feeding bobbin, weight of the package, length of the package, winding speed, and traverse speed. Each setting item has a set value or the like. The machine control device 5 stores therein a plurality of unit lots. The setting contents for each setting item are set in advance for each of the unit lots. The unit lots include at least one different setting content for one or plural of the same setting items.

The CBF lot and the unit lot may be input and set by the user on the touch panel 51 of the machine control device **5.** Alternatively, the CBF lot and the unit lot may be non-transitorily recorded in a tangible recording medium, such as CD-ROM, DVD-ROM, and semiconductor memory, and be provided to the machine control device 5. Still alternatively, the CBF lot and the unit lot may be provided to the machine control device 5 via a communication network as data signals relating to transportation.

The machine control device 5 sets the CBF lots for the respective lines A and B of the transportation apparatus 3. The machine control device 5 sets the unit lots for the respective groups of the winding units 40 ("Group1", "Group2", "Group3", and "Group4") of the automatic winder 4.

The machine control device 5 stores association information in which the CBF lot and the unit lot are associated with each other in the storage unit 52. The association information is information indicating a recommended combination of the CBF lot and the unit lot, the most recent combination of the CBF lot and the unit lot, and other data. The machine control device 5 displays the association information on a lot setting screen of the touch panel 51.

The machine control device 5, when combining the settings of the CBF lot and the unit lot in the association information, can set the combination based on the feed amount of the yarn feeding bobbins 11, for example. In other words, the machine control device 5 can set a combination of the CBF lot and the unit lot only when the feed amount (pcs/min) of the yarn feeding bobbins 11 per unit time in the transportation apparatus 3 (line A and line B) for each CBF lot is equal to or larger than the sum of the discharge amount (pcs/min) of the used bobbins 13 per unit time in the groups of the winding units 40 corresponding to the unit lot. For example, when the feed amount of the CBF lot in "line A" is 24 pcs/min, the discharge amount of the unit lot of "Group 1" is 16 pcs/min, and the discharge amount of the unit lot of "Group 2" is 8 pcs/min, the machine control device 5 can set the combination of the CBF lot and the unit lots. Note that when there is only one group of the winding units 40 corresponding to the CBF lot, the machine control device 5 can set the combination such that the discharge amount is equal to or larger than the feed amount.

The machine control device 5 calculates and acquires the feed amount described above based on the setting items of the CBF lot and calculates and acquires the discharge amount described above based on the setting items of the unit lot. Note that the feed amount and the discharge amount can be calculated from each setting item based on the time to process one yarn feeding bobbin 11, the distance for which the yarn feeding bobbin 11 or the used bobbin 13 is transported, and the speed at which the yarn feeding bobbin 11 or the used bobbin 13 is transported, for example. When the user sets the association information on the touch panel 51, for example, when the user sets the CBF lot for the unit lot, the machine control device 5 does not allow the user to select the CBF lot the feed amount of which is smaller than the discharge amount of the unit lot. In other words, the machine control device 5 can set the combination of the CBF lot and the unit lot in the association information only when the above-described feed amount is equal to or larger than the above-described discharge amount.

When the user sets the lots on the touch panel 51, the machine control device 5 displays mismatch information on the touch panel 51 if the CBF lot set for the transportation apparatus 3 and the unit lot set for the winding units 40 are different from the contents of the association information. The mismatch information is displayed on a pop-up screen, for example. The machine control device 5 may determine whether the CBF lot and the unit lot do not match (or match) based on the names of the lots or on the setting contents of the setting items.

The machine control device 5 displays a plurality of CBF lots on the touch panel 51. The machine control device 5 displays the CBF lots set for the transportation apparatus 3 (line A and line B) and the CBF lots not set for the transportation apparatus 3 in different modes. The machine control device 5 displays a plurality of unit lots on the touch panel 51 and displays the unit lots set for the winding units 40 (group) and the unit lots not set for the winding units 40 in different modes. Display in different modes involves color of the characters, color of the background, style (e.g., oblique type and bold type) of the characters, for example.

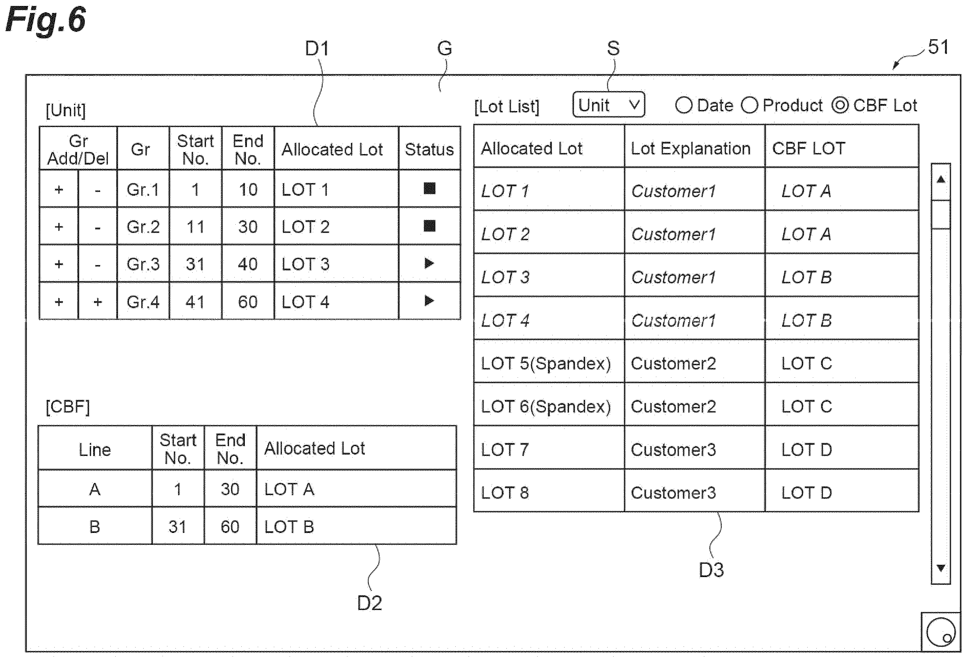

FIG. 6 is a view of an example of the screen displayed on the touch panel 51 of the machine control device 5. As illustrated in FIG. 6, a screen G displayed on the touch panel 51 displays a first display section D1, a second display section D2, and a third display section D3. The first display section D1 displays lot setting of the winding units 40 (represented as [Unit] in FIG. 6). The second display section D2 displays lot setting of the transportation apparatus 3 (represented as [CBF] in FIG. 6). The third display section D3 displays the association information between the lot setting of the winding units 40 and the lot setting of the transportation apparatus 3. The first display section D1, the second display section D2, and the third display section D3 are displayed together on one screen G. The display positions of the first display section D1, the second display section D2, and the third display section D3 in FIG. 6 are given by way of example only, and the display positions are not limited as long as the first display section D1, the second display section D2, and the third display section D3 are displayed together on one screen G. In addition, it is not necessary to constantly display all the information displayable in the first display section D1. For example, only part of the information displayable in the first display section D1 may be displayed, and the other information may be displayed by scrolling. The same may apply to the second display section D2 and the third display section D3

The first display section D1 displays the group (Gr) of the winding units 40, the start number (Start No.) of the winding units 40 constituting the group, the end number (End No.) of the winding units 40 constituting the group, the allocated lot (Allocated Lot), and the status (Status). For the start number and the end number, the winding units 40 are numbered (No. 1 to No. 60) in order from the second end in the first direction. The start number and the end number correspond to the numbers (No.) set for the respective winding units 40. By setting the start number and the end number, the winding units 40 included in the group can be changed.

In the example illustrated in FIG. 6, four groups are displayed. Specifically, "Gr. 1", "Gr. 2", "Gr. 3", and "Gr. 4" are displayed. The groups correspond to "Group 1", "Group 2", "Group 3", and "Group 4" illustrated in FIG. 3. In other words, "Gr.1" corresponds to "Group 1", for example. In FIG. 6, for example, "Gr. 1" includes the winding units 40 from No. 1 to No. 10, and "LOT 1" is allocated thereto. The same applies to the other groups (Gr).

The second display section D2 displays the transportation route (Line) of the bobbin transfer unit 3B of the transportation apparatus 3, the start number (Start No.) of the winding units 40 to which the transportation route transports the bobbins (the yarn feeding bobbin 11 and the used bobbin 13), the end number (End No.) of the winding units 40 to which the transportation route transports the bobbins, and the allocated lot (Allocated Lot).

"Line A" corresponds to the line A (refer to FIG. 3). In "Line A," the bobbins are transported to the winding units 40 from No. 1 to No. 30. "LOT A" is allocated to "Line A". "Line B" corresponds to the line B (refer to FIG. 3). In "Line B," the bobbins are transported to the winding units 40 from No. 31 to No. 60. "LOT B" is allocated to "Line B".

The third display section D3 displays the lot list (Lot List). In the example illustrated in FIG. 6, the lot list of the winding units 40 indicates a list of the unit lots (Allocated Lot) of the winding units 40, explanation of each lot (Lot Explanation), and association information (CBF LOT) indicating the CBF lot of the transportation apparatus 3 associated with each unit lot.

In the example illustrated in FIG. 6, "LOT 1" to "LOT 8" are displayed in the lot list as the lots that can be allocated to the winding units 40. For example, "LOT 1" is associated with "Customer 1" as the explanation of the lot and "LOT A" as the lot of the transportation apparatus 3. For example, "LOT 5 (Spandex)" is associated with "Customer 2" as the explanation of the lot and "LOT C" as the lot of the transportation apparatus 3.

In the example illustrated in FIG. 6, the unit lots set for the winding units 40 are displayed in the lot list in such a manner of being distinguishable from the unit lots not set for the winding units 40. In the example illustrated in FIG. 6, "LOT 1", "LOT 2", "LOT 3" and "LOT 4" are set for the winding units 40 as displayed in the first display section D1. In this case, "LOT 1", "LOT 2", "LOT 3" and "LOT 4" are displayed in the lot list in such a manner of being distinguishable from "LOT 5" or the like. Specifically, the characteristics of "LOT 1", "LOT 2", "LOT 3" and "LOT 4" are represented in oblique type, for example. The characters of "LOT 5" and the like other than "LOT 1," "LOT 2," "LOT 3," and "LOT 4" are represented in characters other than oblique type (upright typeface, which is hereinafter referred to as "upright type"), for example.

In the lot list, the set lots are displayed in order from the top. In the example illustrated in FIG. 6, "LOT 1," "LOT 2," "LOT 3," and "LOT 4" are set for the winding units 40. Therefore, "LOT 1," "LOT 2," "LOT 3," "LOT 4," "LOT 5 (Spandex)", "LOT 6 (Spandex)", "LOT 7" and "LOT 8" are displayed in this order in the lot list. If the lot of the winding units 40 is changed, display (display order) of the lot list is also changed according to the change. Note that regardless of whether the setting is performed, the lots may be displayed in order from the top in the lot list based on the numbers, for example.

In the lot list, the CBF lot of the transportation apparatus 3 recommended for the unit lot set for the winding units 40 is displayed as the association information. In the example illustrated in FIG. 6, it is recommended to set the lot of the transportation apparatus 3 to "LOT A" if "LOT 1" is set for the winding units 40

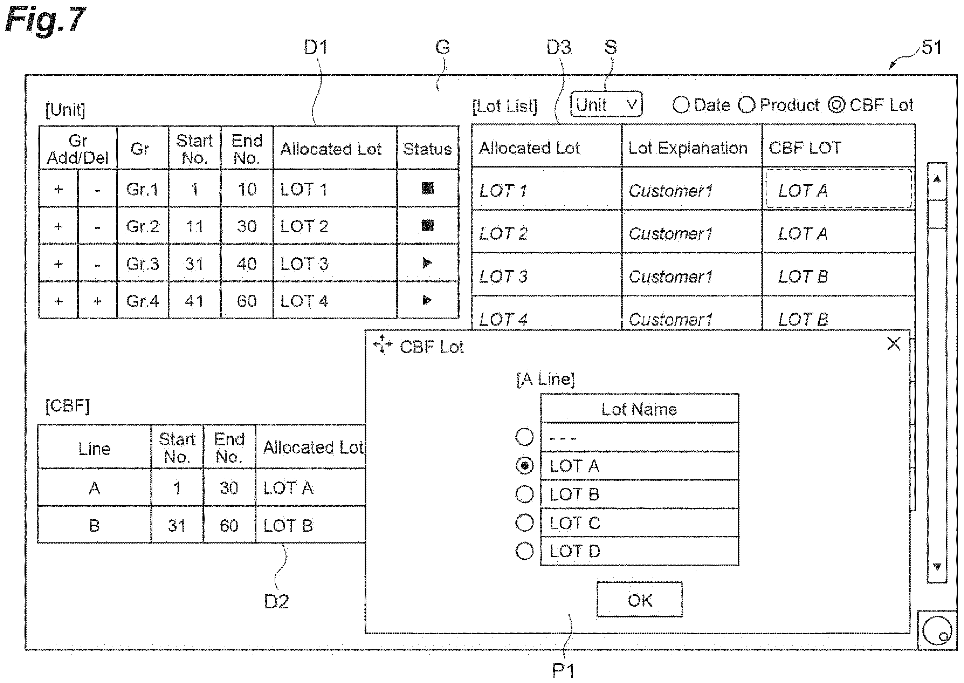

In the lot list, the association information between the unit lot of the winding units 40 and the CBF lot of the transportation apparatus 3 can be changed by the user's operation on the touch panel 51. The following describes changing the association information between the lot of the winding units 40 and the lot of the transportation apparatus 3 with reference to FIG. 7.

The example illustrated in FIG. 7 describes a case where the CBF lot of the transportation apparatus 3 corresponding to "LOT 1" is changed. As illustrated in FIG. 7, the user presses (touches) "LOT A" (indicated by the dashed line) in the third display section D3. When "LOT A" is pressed, a setting screen P1 pops up on the screen G. In other words, the control unit 50 displays the setting screen P1. The setting screen P1 displays the CBF lots (CBF Lot) of the transportation apparatus 3.

The setting screen P1 displays "Line A". "Line A" displays a plurality of CBF lots (LOT A to LOT D). The CBF lot can be selected using a radio button. When the radio button is selected, the lot of the transportation apparatus 3 is associated with "LOT 1" of the winding units 40 and is stored in the storage unit 52. In this example, the association information of "Line A" is stored for "LOT 1". Two pieces of association information of "Line A" and "Line B" may be stored for "LOT 1". In this case, two pieces of association information for "LOT 1" may be displayed vertically (or horizontally). Note that in terms of the CBF lot that fails to be set for "LOT 1" due to the relation between the feed amount and the discharge amount described above, the radio button may be disabled, or the CBF lot that fails to be selected may be hidden.

### Method for Setting the Lots

The following describes the method for setting the lots in the machine control device 5. In the following description, the unit lot of the winding units 40 is set first, and then the CBF lot of the transportation apparatus 3 is set. The following also describes the contents of control performed by the control unit 50 such that a predetermined screen is displayed on the touch panel 51 by the user's operation.

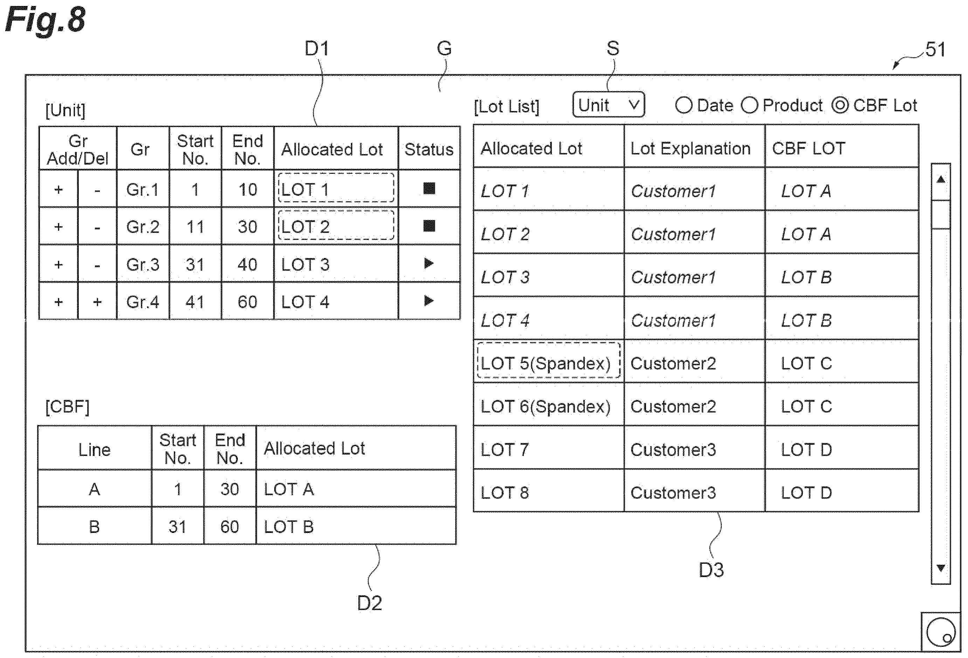

First, the user performs a predetermined operation on the touch panel 51 to display a lot setting management screen on the touch panel 51 as illustrated in FIG. 8. Next, the user sets the start number and the end number of each group of the winding units 40 (Unit). In other words, the user sets the winding units 40 included in each group. Subsequently, the user sets the lot of the winding units 40 included in each group. The following describes a case where the lots of "Gr. 1" and "Gr. 2" are set to "LOT 5".

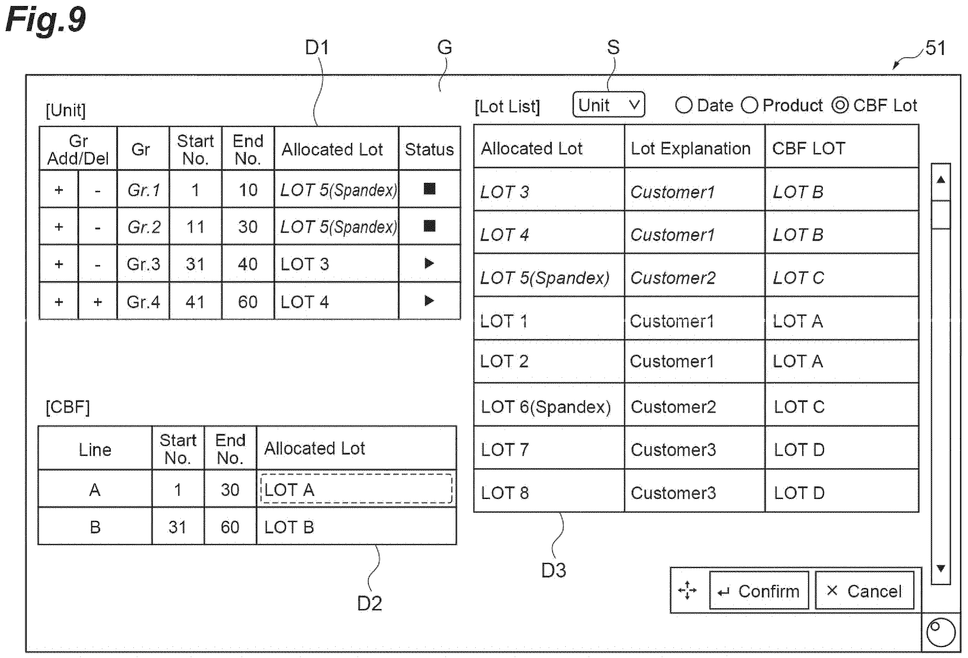

The user presses "LOT 1" (indicated by the dashed line) in the first display section D1 and then presses "LOT 5 (Spandex)" (indicated by the dashed line) in the lot list. As a result, the lot of the "Gr. 1" is set to "LOT 5 (Spandex)" as illustrated in FIG. 9. The characters "Gr. 1" and "LOT 5 (Spandex)" resulting from the change are represented in oblique type, for example. Similarly, as illustrated in FIG. 8, the user presses "LOT 2" (indicated by the dashed line) in the first display section D1 and then presses "LOT 5 (Spandex)" (indicated by the dashed line) in the lot list. As a result, the lot of the "Gr. 2" is set to "LOT 5 (Spandex)" as illustrated in FIG. 9. The characters "Gr. 2" and "LOT 5 (Spandex)" resulting from the change are represented in oblique type, for example.

Subsequently, the user sets the CBF lot of the transportation apparatus 3. The following describes a case where the lot of "Line A" of the transportation apparatus 3 are set to "LOT C".

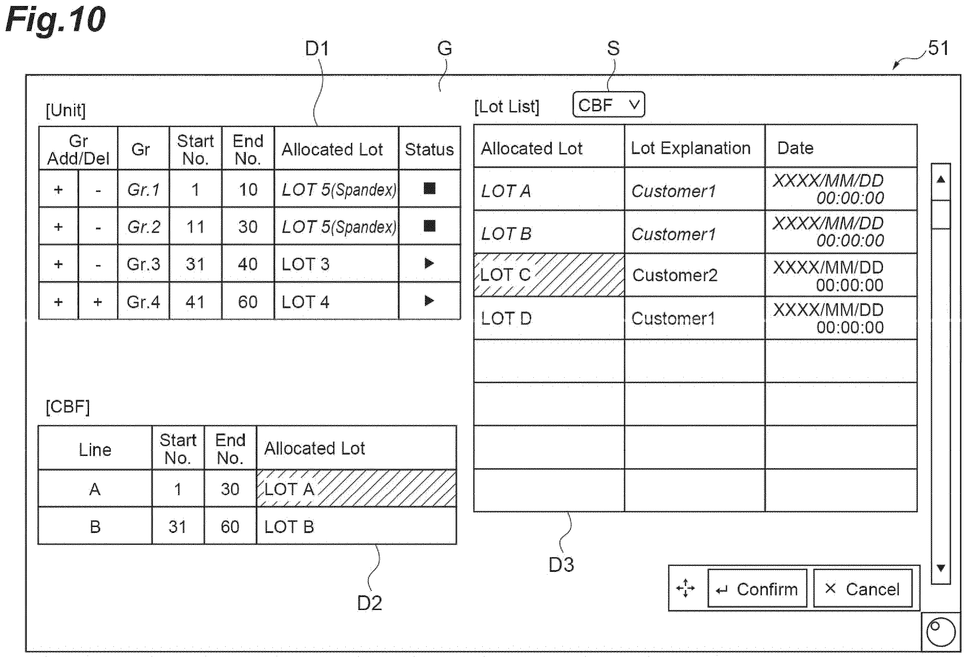

The user presses "LOT A" (indicated by the dashed line) in the second display section D2. As a result, the background of the pressed area (LOT A) is filled in blue, for example, as illustrated in FIG. 10. When "LOT A" (indicated by the dashed line) (refer to FIG. 9) is pressed in the second display section D2, display of the lot list in the third display section D3 is switched to "CBF". "CBF" indicates the transportation apparatus 3. In the example illustrated in FIG. 10, the lot list of "CBF" indicates a list of the lots allocated to the transportation apparatus 3 (Allocated Lot), explanation of the lot (Lot Explanation), and date and time (Date). The date and time are the last date and time when the lot is allocated to the transportation apparatus 3.

In the lot list, the CBF lots set for the transportation apparatus 3 (line A and line B) are displayed in such a manner of being distinguishable from the CBF lots not set for the transportation apparatus 3. In the example illustrated in FIG. 10, the characters of "LOT A" and "LOT B" set at present are represented in oblique type, for example, in the third display section D3. The characters "LOT C" and "LOT D" are represented in upright type, for example.

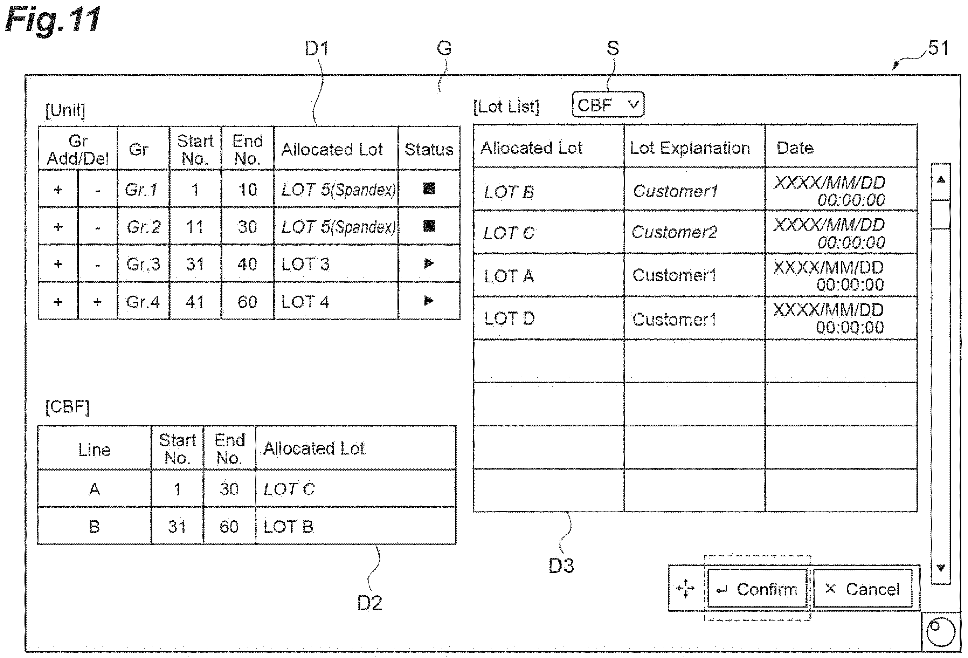

In the lot list, the CBF lot combined with the unit lot of the winding units 40 is displayed in such a manner of being distinguishable from the other CBF lots. Specifically, a group is determined from the start number and the end number of the winding units 40 in "Line A", and the unit lot set for the group is acquired. The CBF unit associated with the unit lot is displayed in such a manner of being distinguishable from the other CBF lots. In the example illustrated in FIG. 10, the background of "LOT C" stored as the association information of "LOT 5 (Spandex)" is filled in blue, for example. As a result, the user can confirm (recognize) at a glance the CBF lot to be set (selected) in the third display section D3. When the user presses "LOT C", the lot of "Line A" is set to "LOT C" as illustrated in FIG. 11. When the setting is completed, the user presses "Confirm". As a result, the setting of the lots is completed.

Note that, based on the relation between the feed amount and the discharge amount described above, the CBF lot that can be set for the unit lot of the winding units 40 may be displayed in such a manner of being distinguishable from the other CBF lots. For example, the CBF lots for the unit lot having a relation that the feed amount is equal to or larger than the discharge amount may be displayed and selected by the user. Alternatively, the feed amount of each CBF lot and/or the discharge amount of each unit lot may be displayed, and the lot may be set by determination of the user. Note that a combination that makes the feed amount smaller than the discharge amount may be set based on the determination of the user.

In addition, in setting the CBF lot, if the CBF lot of "Line A" is the same as that of "Line B", the setting of "Line A" can be applied (transferred) to "Line B", for example. In other words, the machine control device 5 can apply the CBF lot set for one of the lines A and B to the other of the lines A and B. For example, if the user performs the setting of "Line A" and then presses and holds the lot set for "Line A", a screen for instructing to set the lot to "Line B" is displayed. The machine control device 5, when receiving input to transfer the CBF lot set for one of the lines A and B to the other of the lines A and B, applies the CBF lot set for one of the lines A and B to the other of the lines A and B.

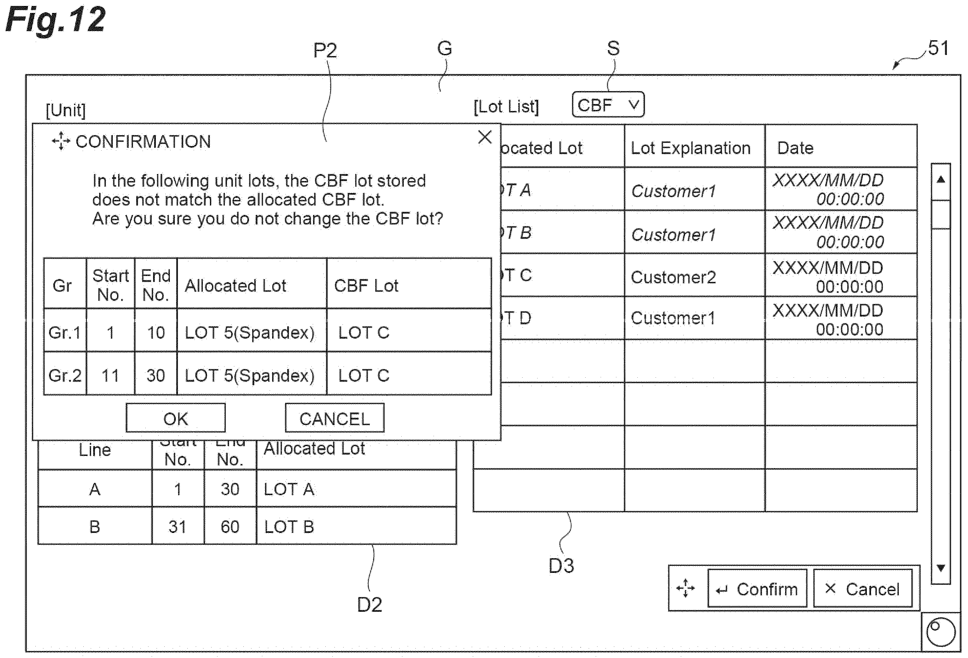

In the setting procedure described above, if the user presses "Confirm" without performing the setting of the transportation apparatus 3 after performing the setting of the winding units 40 ("Gr. 1" and "Gr. 2"), a confirmation pop-up P2 is displayed as illustrated in FIG. 12. The confirmation pop-up P2 displays a message (mismatch information) that the unit lot set for the winding units 40 does not match the CBF lot of the transportation apparatus 3. For example, the confirmation pop-up P2 displays the following message: "In the following unit lots, the CBF lot stored does not match the allocated CBF lot. Are you sure not to change the CBF lot?" The machine control device 5, for example, compares the name of the CBF lot set for the transportation apparatus 3 with the name of the CBF lot associated with the unit lot set for the winding units 40 to determine whether they do not match. The machine control device 5, when determining that they do not match, displays the confirmation pop-up P2.

The confirmation pop-up P2 displays an appropriate combination of the lot of the winding units 40 and the lot of the transportation apparatus 3. When the confirmation pop-up P2 is displayed, the user presses the "OK" or the "CANCEL" button. If the "OK" button is pressed, the CBF lot is set to "LOT C." If the "CANCEL" button is pressed, setting of "LOT A" is maintained for the CBF lot. The machine control device 5, when performing a save process to associate the CBF lot with the unit lot after displaying the confirmation pop-up P2 (mismatch information), updates the combination of the CBF lot and the unit lot subjected to the save process as the association information. Note that performing the save process after displaying the confirmation pop-up P2 means that no other operations (e.g., change) are performed from when the confirmation pop-up P2 is displayed to when the save process is performed.

The setting procedure described above describes a mode where display of the lot list in the third display section D3 is switched to "CBF" when "LOT A" is pressed in the second display section D2, as an example. The display of the lot list in the third display section D3, however, may be switched by operating a switching section S. When the switching section S is pressed, "Unit" and "CBF" are displayed in a pull-down menu. By selecting "Unit" or "CBF," display of the lot list is switched to "Unit" or "CBF."

In the example illustrated in FIG. 10, a mode is indicated where the CBF lot combined with the unit lot of the winding units 40 is displayed in the "CBF" lot list in such a manner of being distinguishable from the other CBF lots. In the CBF lot list, however, a plurality of unit lots associated with the CBF lot may be displayed. In this case, all the unit lots associated with the CBF lot may be displayed. Alternatively, some of the unit lots (a predetermined number of unit lots from the smallest lot number) associated with the CBF lot may be displayed, or the unit lots displayed in the first display section D1 may be displayed.

### Effects

As described above, in the yarn winding system 1 according to the present embodiment, the machine control device 5 stores therein a plurality of CBF lots each including a plurality of setting items relating to the operations of the bobbin processing unit 3A and the bobbin transfer unit 3B of the transportation apparatus 3, and the CBF lots have different contents of the setting items. Thus, the yarn winding system 1 stores therein a plurality of setting items of the transportation apparatus 3 as what is called the lots. By setting the CBF lot for the transportation apparatus 3, the yarn winding system 1 can collectively set a plurality of setting items for the transportation apparatus 3. Therefore, the yarn winding system 1 can save time and effort for setting a plurality of setting items one by one for the transportation apparatus 3. As a result, the yarn winding system 1 can change the setting of the transportation apparatus 3 in a simpler manner.

In the yarn winding system 1 according to the present embodiment, the machine control device 5 stores therein a plurality of unit lots each including a plurality of setting items relating to the operations of the winding units 40, and the unit lots have different contents of the setting items. The machine control device 5 sets one of the unit lots for one or more of the winding units 40. Thus, the machine control device 5 stores therein the unit lots set for the winding units 40 separately from the CBF lots set for the transportation apparatus 3. By setting the unit lot for one or more of the winding units 40, this configuration can collectively set a plurality of setting items for the winding units 40. Therefore, the yarn winding system 1 can change the setting of the winding units 40 in a simpler manner.

In the yarn winding system 1 according to the present embodiment, the machine control device 5 stores therein the association information in which the CBF lot and the unit lot are associated with each other. In this configuration, the CBF lot and the unit lot can be appropriately set for the transportation apparatus 3 and the winding units 40, respectively, by using the association information. The association information can be associated based on predetermined conditions. The predetermined conditions are conditions for appropriate operations of the transportation apparatus 3 and the winding units 40 in the yarn winding system 1, for example.

In the yarn winding system 1 according to the present embodiment, the machine control device 5 includes the touch panel 51. The machine control device 5 displays the CBF lot set for the transportation apparatus 3, the unit lot set for one or more of the winding units 40, and the association information together on one screen G of the touch panel 51. With this configuration, the CBF lot set for the transportation apparatus 3, the unit lot set for one or more of the winding units 40, and the association information can be confirmed at a glance on the screen G of the touch panel 51. In addition, the yarn winding system 1 enables setting the CBF lot and the unit lot while causing the association information to be confirmed.

In the yarn winding system 1 according to the present embodiment, the machine control device 5 displays a plurality of CBF lots on the touch panel 51 and displays the CBF lots set for the transportation apparatus 3 and the CBF lots not set for the transportation apparatus 3 in different modes. This configuration enables the user to readily recognize the CBF lots set for the transportation apparatus 3 and the CBF lots not set for the transportation apparatus 3 on the touch panel 51.

In the yarn winding system 1 according to the present embodiment, the machine control device 5 displays a plurality of unit lots on the touch panel 51 and displays the unit lots set for the winding units 40 and the unit lots not set for the winding units 40 in different modes. This configuration enables the user to readily recognize the unit lots set for the winding units 40 and the unit lots not set for the winding units 40 on the touch panel 51.

In the yarn winding system 1 according to the present embodiment, the machine control device 5 stores therein combinations of the CBF lot set for the transportation apparatus 3 and the unit lot set for the winding units 40. If the CBF lot set for the transportation apparatus 3 and the unit lot set for the winding units 40 is different from the contents of the association information, the machine control device 5 displays the mismatch information on the touch panel 51. With this configuration, the mismatch information allows the user to recognize that setting different from the setting associated in the association information has been made.

In the yarn winding system 1 according to the present embodiment, if the machine control device 5 performs a save process to associate the CBF lot with the unit lot after outputting the mismatch information, it updates the combination of the CBF lot and the unit lot subjected to the save process as the association information. In this configuration, the combination of the CBF lot and the unit lot saved by the user is updated as the association information.

In the yarn winding system 1 according to the present embodiment, the machine control device 5 acquires the feed amount of the yarn feeding bobbins 11 per unit time in the transportation apparatus 3 for each CBF lot and the discharge amount of the used bobbins 13 per unit time in the winding units 40 for each unit lot. In the combination of settings of the CBF lots and the unit, the machine control device 5 permits only the settings that make the feed amount equal to or larger than the discharge amount. In this configuration, only the setting of the CBF lot and the setting of the unit lot that make the feed amount equal to or larger than the discharge amount are possible. As a result, the yarn feeding bobbins 11 can be transported from the transportation apparatus 3 to the winding units 40 without generating a standby state in the winding units 40. Therefore, the present embodiment can prevent reduction in production efficiency of the package P in the winding units 40.

In the yarn winding system 1 according to the present embodiment, the transportation apparatus 3 includes the line A configured to transport the yarn feeding bobbins 11 and the line B configured to transport the yarn feeding bobbins 11. The line A and the line B are each provided with a respective processing unit as mentioned above. The machine control device 5 sets one of the CBF lots for each of the line A and the line B. In this configuration, the CBF lot can be set for each of the two lines A and B. Thus, if the transportation apparatus 3 include a plurality of transportation routes for which the CBF lots need to be set, the setting of the transportation apparatus 3 can be changed in a simpler manner.

While the embodiment according to the present invention has been described, the present invention is not necessarily limited to the embodiment described above, and various modifications can be made without departing from the scope of the appended claims that define the present invention and preferred embodiments thereof.

The embodiment above describes a mode where display of the lot list in the third display section D3 is switched to "CBF" and the CBF lot is selected from the lot list when "LOT A" (indicated by the dashed line in FIG. 9) is pressed in the second display section D2, as illustrated in FIG. 10, as an example. However, when "LOT A" (indicated by the dashed line in FIG. 9) is pressed in the second display section D2, a screen for confirming whether to automatically change the CBF lot may pop up. In this configuration, if automatic change of CBF lot is selected on the pop-up screen, the CBF lot is changed automatically based on the association information.

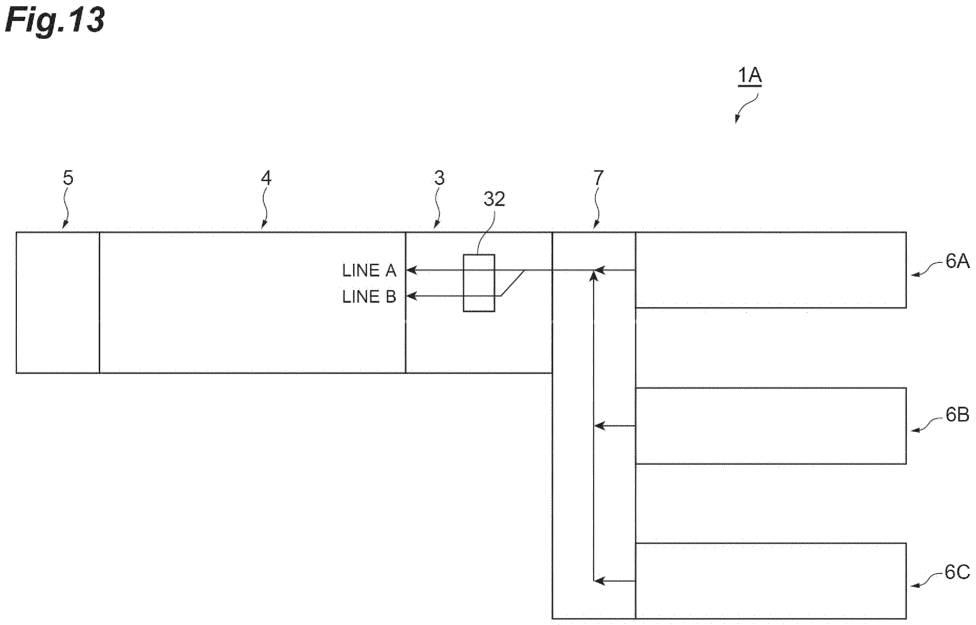

The embodiment above describes a mode where the bobbin feeding apparatus 2 feeds the yarn feeding bobbins 11 to the transportation apparatus 3, as an example. The transportation apparatus 3, however, may be fed with the yarn feeding bobbins from a spinning frame. For example, in a yarn winding system 1A as illustrated in FIG. 13, the yarn feeding bobbins 11 are fed from a first spinning frame 6A, a second spinning frame 6B, and a third spinning frame 6C to the transportation apparatus 3 via a coupling apparatus 7. The number of spinning frames may be one or plural.

The first spinning frame 6A, the second spinning frame 6B, and the third spinning frame 6C can produce the yarn feeding bobbins 11 of different yarn types. The first spinning frame 6A, the second spinning frame 6B, and the third spinning frame 6C provide identification information to the produced yarn feeding bobbins 11. The identification information can include at least information on the yarn type. For example, if the yarn type of the yarn feeding bobbin 11 produced by the first spinning frame 6A is "A", the identification information includes information indicating "yarn type A". Similarly, if the yarn type of the yarn feeding bobbin 11 produced by the second spinning frame 6B is "B", the identification information includes information indicating "yarn type B". If the yarn type of the yarn feeding bobbin 11 produced by the third spinning frame 6C is "C", the identification information includes information indicating "yarn type C". The identification information can be written to an RFID tag provided to the tray 9, for example. The first spinning frame 6A, the second spinning frame 6B, and the third spinning frame 6C may produce the yarn feeding bobbins 11 of a plurality of the same yarn types. In other words, the spinning frames may each produce the yarn feeding bobbins 11 of the yarn types "A", "B", and "C". Also in this case, the identification information can be written to the RFID tag provided to the tray 9, for example.

The transportation apparatus 3 includes a reader (acquisition unit) 32 that can read the RFID tag on the upstream of the bobbin processing unit 3A on the transportation route of the yarn feeding bobbins 11. The reader 32 reads the RFID tag to acquire the identification information. The reader 32 outputs the identification information to the machine control device 5.

The machine control device 5 sets the CBF lots of the transportation apparatus 3 based on the identification information. The machine control device 5 sets the CBF lots for the respective lines A and B of the transportation apparatus 3 based on the information on the yarn type included in the identification information. For example, the machine control device 5 sets "LOT A" for the yarn type A, "LOT B" for the yarn type B, and "LOT C" for the yarn type C. With this configuration, it is possible to handle yarn types the number of which is more than the number of transportation routes if the number of transportation routes of the transportation apparatus 3 is two, specifically the line A and the line B.

The identification information may be acquired based on the color of the winding tube 12 of the yarn feeding bobbin 11, for example. Specifically, the colors of the winding tubes 12 of the yarn feeding bobbins 11 fed from the first spinning frame 6A, the second spinning frame 6B, and the third spinning frame 6C are different from each other. The transportation apparatus 3 includes a device that determines (identifies) the color of the winding tube 12. The machine control device 5 sets the CBF lot based on the yarn type associated with the determined color.

The reader 32 may output the identification information to the transportation control unit 30 of the transportation apparatus 3. In this case, the transportation control unit 30 stores therein the CBF lots, and the transportation control unit 30 sets the CBF lots for the respective lines A and B of the transportation apparatus 3 based on the information on the yarn type included in the identification information. Note that if the line A and the line B of the transportation apparatus 3 are provided with respective control units and the control units each store therein the CBF lot, the reader 32 may output the identification information to the control unit of the line A or the line B of transportation apparatus 3 to perform the same processing as described above.

The embodiment above describes a mode where the bobbin transfer unit 3B of the transportation apparatus 3 includes the line A and the line B, as an example. The bobbin transfer unit 3B of the transportation apparatus 3, however, may include one or three or more transportation routes.

The embodiment above describes a mode where the machine control device 5 is provided to the machine frame 5A, as an example. The machine control device, however, may be a terminal, such as a tablet.

## Claims

1. A yarn winding system (1, 1A) comprising:
a transportation apparatus (3) configured to transport a yarn feeding bobbin (11) to a textile machine (4) including a plurality of winding units (40) each being configured to wind yarn (Y) to form a package (P); and
a control device (5) configured to control the transportation apparatus (3), wherein
the transportation apparatus (3) including a processing unit (3A) configured to perform processing relating to the yarn feeding bobbin (11) based on pre-set setting contents of a plurality of pre-defined different first setting items that relate to the operation of the processing unit (3A),
**characterized in that** the control device (5)is configured
to store therein a plurality of first setting lots each including setting contents for the plurality of first setting items relating to operation of the processing unit (3A) of the transportation apparatus (3), the first setting lots having different setting contents for at least one of the first setting items, and
to set a selected one of the first setting lots for the transportation apparatus (3) by setting the setting contents included in the selected first setting lot for the plurality of first setting items, so that the transportation apparatus (3) is configured to perform the processing relating to the yarn feeding bobbin (11) based on the set setting contents of the selected first setting lot.

2. The yarn winding system (1, 1A) according to claim 1, wherein
the winding units (40) are configured to operate based on pre-set setting contents of a plurality of pre-defined different second setting items,
wherein the control device (5) is configured
to store therein a plurality of second setting lots each including setting contents for the plurality of second setting items relating to operation of the winding units (40), the second setting lots having different setting contents for at least one of the second setting items, and
to set a selected one of the second setting lots for one or more of the winding units (40) by setting the setting contents included in the selected second setting lot for the plurality of second setting items, so that the respective winding unit (40) is configured to operate based on the set setting contents of the selected second setting lot.

3. The yarn winding system (1, 1A) according to claim 2, wherein the control device (5) is configured to store therein association information that indicates which of the first setting lots and of the second setting lots are associated with each other.

4. The yarn winding system (1, 1A) according to one of claims 1 to 3, further comprising:
a display device (51) having a display that can be controlled of which is controlled by the control device (5), wherein
the control device (5) is configured to cause the display device (51) to display the first setting lots and display the first setting lot set for the transportation apparatus (3) and the first lot not set for the transportation apparatus (3) in different presentation modes.

5. The yarn winding system (1, 1A) according to claims 3 and 4, wherein
the control device (5) is configured to display the first setting lot set for the transportation apparatus (3), the second setting lot set for one or more of the winding units (40), and the association information together on one screen (G) of the display device (51).

6. The yarn winding system (1, 1A) according to claim 5, wherein the control device (5) is configured to cause the display device (51) to display the second setting lots and to display the second setting lot set for the winding unit (40) and the second setting lot not set for the winding unit (40) in different presentation modes.

7. The yarn winding system (1, 1A) according to any one of claims 3, 5 to 6, wherein
the control device (5) is configured to store therein a combination of the first setting lot set for the transportation apparatus (3) and the second setting lot set for the winding unit (40), and
the control device (5) is configured to output mismatch information when the combination of the first lot setting set for the transportation apparatus (3) and the second setting lot set for the winding unit (40) is different from the association information.

8. The yarn winding system (1, 1A) according to claim 7, wherein, when the control device (5) is configured to perform a save process to save the first setting lot and the second setting lot after outputting the mismatch information, wherein the control device (5) is further configured to update the combination of the first lot and the second lot subjected to the save process as the association information.

9. The yarn winding system (1, 1A) according to any one of claims 2, 3, 5 to 8, wherein the control device is configured
to acquire a feed amount of the yarn feeding bobbins (11) per unit time in the transportation apparatus (3) for each of the first setting lots and a discharge amount of used bobbins (13) per unit time in the winding unit (40) for each of the second setting lots, and
to allow only a first setting lot and a second setting lot that make the feed amount equal to or larger than the discharge amount to be combined by setting this first setting lot for the transportation apparatus (3) and setting this second setting lot for the winding unit (40).

10. The yarn winding system (1, 1A) according to any one of claims 1 to 9, wherein
the transportation apparatus (3) comprises a first transportation route (A) configured to transport the yarn feeding bobbin (11) and a second transportation route (B) configured to transport the yarn feeding bobbin (11),
the first transportation route (A) and the second transportation route (B) are each provided with a respective processing unit (3A), and
the control device (5) is configured to set a respective one of the first setting lots for each of the first transportation route (A) and the second transportation route (B).

11. The yarn winding system (1, 1A) according to claim 10, wherein, when the control device (5) is configured to receive input to transfer the first setting lot set for one of the first transportation route (A) and the second transportation route (B) to the other of the first transportation route (A) and the second transportation route (B), and, if such input is received by the control device (5), to apply the first setting lot set for one of the first transportation route (A) and the second transportation route (B) to the other of the first transportation route (A) and the second transportation route (A).

12. The yarn winding system according to any one of claims 1 to 11, wherein
the transportation apparatus (3) includes an acquisition unit (32) provided upstream the processing unit (3A) on a transportation route of the yarn feeding bobbin (11) that is configured to acquire identification information for identifying the yarn feeding bobbin (11), and
the control device (5) is configured to set the first setting lot based on the identification information acquired by the acquisition unit (32).

13. The yarn winding system according to any one of claims 1 to 12, wherein the processing unit (3A) is at least one of a bobbin drawer, a bobbin dropper, a bunch winding releaser, a yarn end processor, and a yarn end finder.

14. A method for configuring and operating a yarn winding system (1, 1A) that comprises a transportation apparatus (3) and a textile machine (4), the transportation apparatus (3) serving to transport a yarn feeding bobbin (11) to the textile machine (4) and the textile machine including a plurality of winding units (40) each serving to wind yarn (Y) to form a package (P), wherein the method comprises:
- defining a plurality of first setting lots each including setting contents for a plurality of first setting items that relate to an operation of the transportation apparatus (3, the first setting lots having different setting contents for at least one of the first setting items;
- selecting one of the defined first setting lots;
- setting the selected first setting lot for the transportation apparatus (3) by setting the setting contents included in the selected first setting lot for the plurality of first setting items;
- operating the transportation apparatus (3) based on the set setting contents of the select first setting lot having been set.

15. The method of claim 14, comprising:
- defining a plurality of second setting lots each including setting contents for a plurality of second setting items that relate an operation of the winding units (40), the second setting lots having different setting contents for at least one of the second setting items;
- selecting and setting one of the defined second setting lots for one of more of the winding units (40);
- operating the respective winding unit (40) based on the set setting contents of the selected second setting lot having been set.

## Patentansprüche

1. Garn-Wickelsystem (1, 1A), umfassend:
eine Transportvorrichtung (3), welche dazu eingerichtet ist, eine Garn-Zuführspule (11) zu einer Textilmaschine (4) zu transportieren, welche eine Mehrzahl von Wickeleinheiten (40) umfasst, welche jeweils dazu eingerichtet sind, Garn (Y) zu wickeln, um eine Packung (P) zu bilden; und
eine Steuervorrichtung (5), welche dazu eingerichtet ist, die Transportvorrichtung (3) zu steuern, wobei
die Transportvorrichtung (3) eine Verarbeitungseinheit (3A) umfasst, welche dazu eingerichtet ist, eine Verarbeitung im Zusammenhang mit der Garn-Zuführspule (11) auf Grundlage von vorfestgelegten Festlegungsinhalten einer Mehrzahl von vordefinierten unterschiedlichen ersten Festlegungsobjekten durchzuführen, welche den Betrieb der Verarbeitungseinheit (3A) betreffen,
**dadurch gekennzeichnet, dass** die Steuervorrichtung (5) dazu eingerichtet ist:
darin eine Mehrzahl von ersten Festlegungsmengen zu speichern, welche jeweils Festlegungsinhalte für die Mehrzahl von ersten Festlegungsobjekten umfassen, welche einen Betrieb der Verarbeitungseinheit (3A) der Transportvorrichtung (3) betreffen, wobei die ersten Festlegungsmengen unterschiedliche Festlegungsinhalte für wenigstens eines aus den ersten Festlegungsobjekten aufweisen, und
eine ausgewählte aus den ersten Festlegungsmengen für die Transportvorrichtung (3) festzulegen, indem die Festlegungsinhalte festgelegt werden, welche in der ausgewählten ersten Festlegungsmenge für die Mehrzahl von ersten Festlegungsobjekten umfasst sind, so dass die Transportvorrichtung (3) dazu eingerichtet ist, die Verarbeitung, welche die Garn-Zuführspule (11) betrifft, auf Grundlage der festgelegten Festlegungsinhalte der ausgewählten ersten Festlegungsmenge durchzuführen.

2. Garn-Wickelsystem (1, 1A) nach Anspruch 1, wobei die Wickeleinheiten (40) dazu eingerichtet sind, auf Grundlage von vorfestgelegten Festlegungsinhalten einer Mehrzahl von vordefinierten unterschiedlichen zweiten Festlegungsobjekten zu arbeiten,
wobei die Steuervorrichtung (5) dazu eingerichtet ist:
darin eine Mehrzahl von zweiten Festlegungsmengen zu speichern, welche jeweils Festlegungsinhalte für die Mehrzahl von zweiten Festlegungsobjekten umfassen, welche einen Betrieb der Wickeleinheiten (40) betreffen, wobei die zweiten Festlegungsmengen unterschiedliche Festlegungsinhalte für wenigstens eines aus den zweiten Festlegungsobjekten aufweisen, und
eine ausgewählte der zweiten Festlegungsmengen für eine oder mehrere der Wickeleinheiten (40) durch Festlegen der Festlegungsinhalte festzulegen, welche in der ausgewählten zweiten Festlegungsmenge für die Mehrzahl von zweiten Festlegungsobjekten umfasst sind, so dass die entsprechende Wickeleinheit (40) dazu eingerichtet ist, auf Grundlage der festgelegten Festlegungsinhalte der ausgewählten zweiten Festlegungsmenge zu arbeiten.

3. Garn-Wickelsystem (1, 1A) nach Anspruch 2, wobei die Steuervorrichtung (5) dazu eingerichtet ist, darin Zuordnungsinformationen zu speichern, welche anzeigen, welche aus den ersten Festlegungsmengen und den zweiten Festlegungsmengen einander zugeordnet sind.

4. Garn-Wickelsystem (1, 1A) nach einem der Ansprüche 1 bis 3, ferner umfassend:
eine Anzeigevorrichtung (51), welche eine Anzeige aufweist, welche von der Steuervorrichtung (5) gesteuert werden kann, wobei
die Steuervorrichtung (5) dazu eingerichtet ist, die Anzeigevorrichtung (51) dazu zu veranlassen die ersten Festlegungsmengen anzuzeigen und die erste Festlegungsmenge, welche für die Transportvorrichtung (3) festgelegt ist, und die erste Menge, welche nicht für die Transportvorrichtung (3) festgelegt ist, in unterschiedlichen Präsentationsmodi anzuzeigen.

5. Garn-Wickelsystem (1, 1A) nach den Ansprüchen 3 und 4, wobei die Steuervorrichtung (5) dazu eingerichtet ist, die erste festlegungsmenge, welche für die Transportvorrichtung (3) festgelegt ist, die zweite Festlegungsmenge, welche für eine oder mehrere der Wickeleinheiten (40) festgelegt ist, und die Zuordnungsinformationen zusammen an einem Bildschirm (G) der Anzeigevorrichtung (51) anzuzeigen.

6. Garn-Wickelsystem (1, 1A) nach Anspruch 5, wobei die Steuervorrichtung (5) dazu eingerichtet ist, die Anzeigevorrichtung (51) dazu zu veranlassen, die zweiten Festlegungsmengen anzuzeigen und die zweite Festlegungsmenge, welche für die Wickeleinheit (40) festgelegt ist, und die zweite Festlegungsmenge, welche nicht für die Wickeleinheit (40) festgelegt ist, in unterschiedlichen Präsentationsmodi anzuzeigen.

7. Garn-Wickelsystem (1, 1A) nach einem der Ansprüche 3, 5 bis 6, wobei die Steuervorrichtung (5) dazu eingerichtet ist, darin eine Kombination der ersten Festlegungsmenge, welche für die Transportvorrichtung (3) festgelegt ist, und der zweiten Festlegungsmenge, welche für die Wickeleinheit (40) festgelegt ist, zu speichern, und
die Steuervorrichtung (5) dazu eingerichtet ist, Abweichungsinformationen auszugeben, wenn die Kombination der ersten Festlegungsmenge, welche für die Transportvorrichtung (3) festgelegt ist, und der zweiten Festlegungsmenge, welche für die Wickeleinheit (40) festgelegt ist, verschieden von den Zuordnungsinformationen ist.

8. Garn-Wickelsystem (1, 1A) nach Anspruch 7, wobei, wenn die Steuervorrichtung (5) dazu eingerichtet ist, einen Speicherprozess zum Speichern der ersten Festlegungsmenge und der zweiten Festlegungsmenge nach einem Ausgeben der Abweichungsinformationen durchzuführen, wobei die Steuervorrichtung (5) ferner dazu eingerichtet ist, die Kombination der ersten Menge und der zweiten Menge zu aktualisieren, welche dem Speicherprozess unterzogen wird, als die Zuordnungsinformationen.

9. Garn-Wickelsystem (1, 1A) nach einem der Ansprüche 2, 3, 5 bis 8, wobei die Steuervorrichtung dazu eingerichtet ist:
eine Zuführmenge der Garn-Zuführspulen (11) pro Einheitszeit in der Transportvorrichtung (3) für jede der ersten Festlegungsmengen und eine Ausgabemenge von verwendeten Spulen (13) pro Einheitszeit in der Wickeleinheit (40) für jede der zweiten Festlegungsmengen aufzunehmen, und
lediglich einer ersten Festlegungsmenge und einer zweiten Festlegungsmenge, welche die Zuführmenge gleich oder größer als die Abgabemenge machen, zu erlauben, kombiniert zu werden, indem diese erste Festlegungsmenge für die Transportvorrichtung (3) festgelegt wird und diese zweite Festlegungsmenge für die Wickeleinheit (40) festgelegt wird.

10. Garn-Wickelsystem (1, 1A) nach einem der Ansprüche 1 bis 9, wobei die Transportvorrichtung (3) eine erste Transportroute (A), welche dazu eingerichtet ist, die Garn-Zuführspule (11) zu transportieren, und eine zweite Transportroute (B) umfasst, welche dazu eingerichtet ist, die Garn-Zuführspule (11) zu transportieren,
die erste Transportroute (A) und die zweite Transportroute (B) jeweils mit einer entsprechenden Verarbeitungseinheit (3A) bereitgestellt sind, und die Steuervorrichtung (5) dazu eingerichtet ist, eine entsprechende aus den ersten Festlegungsmengen für jede aus der ersten Transportroute (A) und der zweiten Transportroute (B) festzulegen.

11. Garn-Wickelsystem (1, 1A) nach Anspruch 10, wobei, wenn die Steuervorrichtung (5) dazu eingerichtet ist, eine Eingabe zum Transferieren der ersten Festlegungsmenge, welche für eine aus der ersten Transportroute (A) und der zweiten Transportroute (B) festgelegt ist, zu der anderen aus der ersten Transportroute (A) und der zweiten Transportroute (B) zu empfangen, und wenn eine solche Eingabe von der Steuervorrichtung (5) empfangen wird, die erste Festlegungsmenge, welche für eine aus der ersten Transportroute (A) und der zweiten Transportroute (B) festgelegt ist, auf die andere aus der ersten Transportroute (A) und der zweiten Transportroute (A) anzuwenden.

12. Garn-Wickelsystem nach einem der Ansprüche 1 bis 11, wobei
die Transportvorrichtung (3) eine Aufnahmeeinheit (32) umfasst, welche stromaufwärts der Verarbeitungseinheit (3A) an einer Transportroute der Garn-Zuführspule (11) bereitgestellt ist, welche dazu eingerichtet ist, Identifikationsinformationen zum Identifizieren der Garn-Zuführspule (11) aufzunehmen, und
die Steuervorrichtung (5) dazu eingerichtet ist, die erste Festlegungsmenge auf Grundlage der Identifikationsinformationen festzulegen, welche von der Aufnahmeeinheit (32) aufgenommen werden.

13. Garn-Wickelsystem nach einem der Ansprüche 1 bis 12, wobei die Verarbeitungseinheit (3A) wenigstens eines aus einer Spulen-Zieheinheit, einer Spulen-Falleinheit, einer Knäuel-Wickelfreigebeeinheit, einer Garnende-Verarbeitungseinheit und einer Garnende-Findeeinheit ist.

14. Verfahren zum Konfigurieren und Betreiben eines Garn-Wickelsystems (1, 1A), welches eine Transportvorrichtung (3) und eine Textilmaschine (4) umfasst, wobei die Transportvorrichtung (3) zum Transportieren einer Garn-Zuführspule (11) zu der Textilmaschine (4) dient und die Textilmaschine eine Mehrzahl von Wickeleinheiten (40) umfasst, welche jeweils dazu dienen, Garn (Y) zu wickeln, um eine Packung (P) zu bilden, wobei das Verfahren umfasst:
- Definieren einer Mehrzahl von ersten Festlegungsmengen, welche jeweils Festlegungsinhalte für eine Mehrzahl von ersten Festlegungsobjekten umfassen, welche einen Betrieb der Transportvorrichtung (3) betreffen, wobei die ersten Festlegungsmengen unterschiedliche Festlegungsinhalte für wenigstens eines aus den ersten Festlegungsobjekten aufweisen;
- Auswählen von einer der definierten ersten Festlegungsmengen;
- Festlegen der ausgewählten ersten Festlegungsmenge für die Transportvorrichtung (3) durch Festlegen der Festlegungsinhalte, welche in der ausgewählten ersten Festlegungsmenge für die Mehrzahl von ersten Festlegungsobjekten umfasst sind;
- Betreiben der Transportvorrichtung (3) auf Grundlage der festgelegten Festlegungsinhalte der ausgewählten ersten Festlegungsmenge, welche festgelegt worden ist.

15. Verfahren nach Anspruch 14, umfassend:
- Definieren einer Mehrzahl von zweiten Festlegungsmengen, welche jeweils Festlegungsinhalte für eine Mehrzahl von zweiten Festlegungsobjekten umfassen, welche einen Betrieb der Wickeleinheiten (40) betreffen, wobei die zweiten Festlegungsmengen unterschiedliche Festlegungsinhalte für wenigstens eines aus den ersten Festlegungsobjekten aufweisen;
- Auswählen und Festlegen von einer der definierten zweiten Festlegungsmengen für eine oder mehrere der Wickeleinheiten (40);
- Betreiben der entsprechenden Wickeleinheit (40) auf Grundlage der festgelegten Festlegungsinhalte der ausgewählten zweiten Festlegungsmenge, welche festgelegt worden ist.

## Revendications

1. Système de bobinage de fil (1, 1A), comprenant :
un appareil de transport (3) configuré pour transporter une bobine d'alimentation en fil (11) vers une machine pour textile (4) comprenant une pluralité d'unités de bobinage (40) configurées individuellement pour bobiner un fil (Y) pour former un support pour enroulements (P) ; et
un dispositif de commande (5) configuré pour commander l'appareil de transport (3), dans lequel
l'appareil de transport (3) comprenant une unité de traitement (3A) configurée pour mettre en œuvre un traitement associé à la bobine d'alimentation en fil (11) sur la base de contenus de paramétrage préparamétrés d'une pluralité de premiers éléments de paramétrage différents prédéfinis qui se rapportent à la mise en œuvre de l'unité de traitement (3A),
**caractérisé en ce que** le dispositif de commande (5) est configuré
pour mémoriser en son sein une pluralité de premiers lots de paramétrage comprenant chacun des contenus de paramétrage de la pluralité de premiers éléments de paramétrage se rapportant à la mise en œuvre de l'unité de traitement (3A) de l'appareil de transport (3), les premiers lots de paramétrage ayant des contenus de paramétrage différents pour au moins l'un des premiers éléments de paramétrage, et
pour paramétrer un lot sélectionné des premiers lots de paramétrage pour l'appareil de transport (3) par un paramétrage des contenus de paramétrage compris dans le premier lot de paramétrage sélectionné de la pluralité de premiers éléments de paramétrage, de sorte que l'appareil de transport (3) est configuré pour mettre en œuvre le traitement associé à la bobine d'alimentation en fil (11) sur la base des contenus de paramétrage paramétrés du premier lot de paramétrage sélectionné.

2. Système de bobinage de fil (1, 1A) selon la revendication 1, dans lequel
les unités de bobinage (40) sont configurées pour fonctionner sur la base de contenus de paramétrage préparamétrés d'une pluralité de seconds éléments de paramétrage différents prédéfinis,
dans lequel le dispositif de commande (5) est configuré
pour mémoriser en son sein une pluralité de seconds lots de paramétrage comprenant chacun des contenus de paramétrage de la pluralité de seconds éléments de paramétrage se rapportant à une mise en œuvre des unités de bobinage (40), les seconds lots de paramétrage ayant des contenus de paramétrage différents pour au moins un élément des seconds éléments de paramétrage, et
pour paramétrer un lot sélectionné des seconds lots de paramétrage pour une ou plusieurs des unités de bobinage (40) par un paramétrage des contenus de paramétrage compris dans le second lot de paramétrage sélectionné de la pluralité de seconds éléments de paramétrage, de sorte que l'unité de bobinage respective (40) est configurée pour fonctionner sur la base des contenus de paramétrage paramétrés du second lot de paramétrage sélectionné.

3. Système de bobinage de fil (1, 1A) selon la revendication 2, dans lequel le dispositif de commande (5) est configuré pour mémoriser en son sein des informations d'association qui indiquent ceux des premiers lots de paramétrage et des seconds lots de paramétrage qui sont associés les uns aux autres.

4. Système de bobinage de fil (1, 1A) selon l'une quelconque des revendications 1 à 3, comprenant en outre :
un dispositif d'affichage (51) comportant un afficheur qui peut être commandé qui est commandé par le dispositif de commande (5), dans lequel
le dispositif de commande (5) est configuré pour amener le dispositif d'affichage (51) à afficher les premiers lots de paramétrage et à afficher le premier lot de paramétrage paramétré pour l'appareil de transport (3) et le premier lot non paramétré pour l'appareil de transport (3) dans des modes de présentation différents.

5. Système de bobinage de fil (1, 1A) selon les revendications 3 et 4, dans lequel
le dispositif de commande (5) est configuré pour afficher conjointement le premier lot de paramétrage paramétré pour l'appareil de transport (3), le second lot de paramétrage paramétré pour une ou plusieurs des unités de bobinage (40) et les informations d'association sur un écran (G) du dispositif d'affichage (51).

6. Système de bobinage de fil (1, 1A) selon la revendication 5, dans lequel le dispositif de commande (5) est configuré pour amener le dispositif d'affichage (51) à afficher les seconds lots de paramétrage et à afficher le second lot de paramétrage paramétré pour l'unité de bobinage (40) et le second lot de paramétrage non paramétré pour l'unité de bobinage (40) dans des modes de présentation différents.

7. Système de bobinage de fil (1, 1A) selon l'une quelconque des revendications 3, 5 et 6, dans lequel
le dispositif de commande (5) est configuré pour mémoriser en son sein une combinaison du premier lot de paramétrage paramétré pour l'appareil de transport (3) et du second lot de paramétrage paramétré pour l'unité de bobinage (40), et
le dispositif de commande (5) est configuré pour délivrer des informations de défaut de concordance lorsque la combinaison du premier lot de paramétrage paramétré pour l'appareil de transport (3) et du second lot de paramétrage paramétré pour l'unité de bobinage (40) est différente des informations d'association.

8. Système de bobinage de fil (1, 1A) selon la revendication 7, dans lequel, lorsque le dispositif de commande (5) est configuré pour mettre en œuvre un processus d'enregistrement pour enregistrer le premier lot de paramétrage et le second lot de paramétrage après la délivrance des informations de défaut de concordance, le dispositif de commande (5) est en outre configuré pour mettre à jour la combinaison du premier lot et du second lot soumis au processus d'enregistrement en tant que les informations d'association.

9. Système de bobinage de fil (1, 1A) selon l'une quelconque des revendications 2, 3, 5 à 8, dans lequel le dispositif de commande est configuré
pour acquérir une quantité d'alimentation des bobines d'alimentation en fil (11) par temps unitaire dans l'appareil de transport (3) pour chacun des premiers lots de paramétrage et une quantité de vidage de bobines utilisées (13) par temps unitaire dans l'unité de bobinage (40) pour chacun des seconds lots de paramétrage, et
pour ne permettre de combiner qu'un premier lot de paramétrage et un second lot de paramétrage qui rendent la quantité d'alimentation égale ou supérieure à la quantité de vidage par un paramétrage de ce premier lot de paramétrage pour l'appareil de transport (3) et par un paramétrage de ce second lot de paramétrage pour l'unité de bobinage (40).

10. Système de bobinage de fil (1, 1A) selon l'une quelconque des revendications 1 à 9, dans lequel
l'appareil de transport (3) comprend un premier chemin de transport (A) configuré pour transporter la bobine d'alimentation en fil (11) et un second chemin de transport (B) configuré pour transporter la bobine d'alimentation en fil (11),
le premier chemin de transport (A) et le second chemin de transport (B) sont chacun dotés d'une unité de traitement respective (3A), et
le dispositif de commande (5) est configuré pour paramétrer un lot respectif des premiers lots de paramétrage pour chacun du premier chemin de transport (A) et du second chemin de transport (B).

11. Système de bobinage de fil (1, 1A) selon la revendication 10, dans lequel, lorsque le dispositif de commande (5) est configuré pour recevoir une entrée pour transférer le premier lot de paramétrage paramétré pour l'un du premier chemin de transport (A) et du second chemin de transport (B) à l'autre du premier chemin de transport (A) et du second chemin de transport (B), et, si cette entrée est reçue par le dispositif de commande (5), pour appliquer le premier lot de paramétrage paramétré pour l'un du premier chemin de transport (A) et du second chemin de transport (B) à l'autre du premier chemin de transport (A) et du second chemin de transport (B).

12. Système de bobinage de fil selon l'une quelconque des revendications 1 à 11, dans lequel
l'appareil de transport (3) comprend une unité d'acquisition (32) disposée en amont de l'unité de traitement (3A) sur un chemin de transport de la bobine d'alimentation en fil (11) qui est configurée pour acquérir des informations d'identification servant à identifier la bobine d'alimentation en fil (11), et
le dispositif de commande (5) est configuré pour paramétrer le premier lot de paramétrage sur la base des informations d'identification acquises par l'unité d'acquisition (32).

13. Système de bobinage de fil selon l'une quelconque des revendications 1 à 12, dans lequel l'unité de traitement (3A) est au moins l'un d'un dispositif d'étirage de bobine, d'un dispositif d'écartement de bobine, d'un dispositif de libération d'enroulement de réserve, d'un dispositif de traitement de bout de fil et d'un dispositif de recherche de bout de fil.

14. Procédé pour configurer et mettre en œuvre un système de bobinage de fil (1, 1A) qui comprend un appareil de transport (3) et une machine pour textile (4), l'appareil de transport (3) servant à transporter une bobine d'alimentation en fil (11) vers la machine pour textile (4) et la machine pour textile comprenant une pluralité d'unités de bobinage (40) servant chacune à bobiner un fil (Y) pour former un support pour enroulements (P), dans lequel le procédé comprend les étapes consistant à :
- définir une pluralité de premiers lots de paramétrage comprenant chacun des contenus de paramétrage d'une pluralité de premiers éléments de paramétrage qui se rapportent à une mise en œuvre de l'appareil de transport (3), les premiers lots de paramétrage ayant des contenus de paramétrage différents pour au moins l'un des premiers éléments de paramétrage ;
- sélectionner l'un des premiers lots de paramétrage définis ;
- paramétrer le premier lot de paramétrage sélectionné pour l'appareil de transport (3) par un paramétrage des contenus de paramétrage compris dans le premier lot de paramétrage sélectionné de la pluralité de premiers éléments de paramétrage ;
- mettre en œuvre l'appareil de transport (3) sur la base des contenus de paramétrage paramétrés du premier lot de paramétrage sélectionné ayant été paramétré.

15. Procédé selon la revendication 14, comprenant les étapes consistant à :
- définir une pluralité de seconds lots de paramétrage comprenant chacun des contenus de paramétrage d'une pluralité de seconds éléments de paramétrage qui se rapportent à une mise en œuvre des unités de bobinage (40), les seconds lots de paramétrage ayant des contenus de paramétrage différents pour au moins l'un des seconds éléments de paramétrage ;
- sélectionner et paramétrer l'un des seconds lots de paramétrage définis pour une ou plusieurs unités de bobinage (40) ;
- mettre en œuvre l'unité de bobinage respective (40) sur la base des contenus de paramétrage paramétrés du second lot de paramétrage sélectionné ayant été paramétré.
